# EUROPEAN PATENT APPLICATION

(11) **EP 4 242 456 A1**
(43) Date of publication of application: **13.09.2023**
(21) Application number: 23160943.9
(22) Date of filing: 09.03.2023
(51) Int. Cl.: F03G 7/10

(54) **METHOD FOR GENERATING ELECTRICITY USING GRAVITY, GRAVITY-DRIVEN ELECTRICITY GENERATING DEVICE AND POWER UNIT THEREOF**

(30) Priority: 10.03.2022 CN 202210240630
(71) Applicant: Yen Hoo Technology Co., Ltd., Kaohsiung City (TW)
(72) Inventor: Chen, Wen-Kuan, Kaohsiung City (TW)
(74) Representative: Lang, Christian

(57) **Abstract**

A gravity-driven electricity generating device includes a first power unit (F1) having a first swaying frame (2a) pivoting from a first position to a second position to output a first power, thereby moving a first end (E1) of a pressing board downward and moving a second end (E2) of the pressing board upward to pivot in a first direction. A second power unit (F2) has a second swaying frame (2b) pivoting from a first position to a second position to output second power, thereby moving the first end (E1) of the pressing board upward and moving the second end (E2) of the pressing board downward to pivot in a second direction. Upward movement of the first end (E1) causes the first swaying frame (2a) to pivot from the second direction to the first position. Downward movement of the second end (E2) causes the second swaying frame (2b) to pivot from the second direction to the first position.

## Description

### BACKGROUND OF THE INVENTION

### 1. Field of the Invention

The present invention relates to a method for providing green energy and its device and, more particularly, to a method for generating electricity using gravity, a gravity-driven electricity generating device, and a power unit thereof.

### 2. Description of the Related Art

In recent years, with increasing awareness of environmental protection, many countries have promoted reduction in non-renewable energy one after another and actively devoted to development of renewable energies. Renewable energies include natural energies, such as solar energy, wind power, hydropower, waves, ocean currents, tides, etc. However, each of the above renewable energies is limited in the field of installation and causes certain destruction and interference to the natural ecology. Furthermore, most renewable energies require large or complicated equipment which is expensive. Thus, considerable expenditures are required in development and production of energy as well as maintenance.

Of more importance, the renewable energies use natural energies as the power for generating electricity and, thus, may encounter periodic change in the strength of the natural energies or unpredictable sudden natural disasters, which is one of the factors resulting in failure in continuous stable generation of electricity by the equipment. Thus, current equipment can only intermittently produce energy or requires development in the compensation mechanism of off-peak production capacity and development in the protection mechanism such that the equipment is difficult to damage in extreme environments. The above factors cause problems of high costs of the equipment for producing renewable energy or difficulties in increasing the production capacity.

On the other hand, the concept of "gravitricity" has been researched and proposed in recent years, which uses wasted drilling platform and wasted mines. In a well with a depth of 150-1500 meters, a rig of a length of 16 meters can be repeatedly lifted and lowered. Namely, the rig is firstly lifted to a position above the well by an electric winch. When it is desired to use electricity, the rig is lowered to release the stored electricity. The concept is similar to a pumped-storage power station. Another type of gravitricity equipment is disposed on the ground and has a height of about 35 stories. Furthermore, a super large crane disposed on top of the equipment can stack concrete bricks of 35 tons on the top floor of the equipment in advance. When it is desired to use electricity, the crane moves the bricks to the bottom to actuate the generator by potential energy. However, the above two gravitricity equipments are extremely huge and, thus, disadvantageous to installation in the city. Furthermore, a considerable amount of energy is consumed in lifting the jig or concrete bricks. As a whole, it is not a good idea in "producing energy", though it is an "energy storage" method.

Furthermore, products using similar concepts have come out, such as a gravity light. A user spends a few seconds to pull a string tied with a weight block to a top end of the device. Then, the weight block pulling the string drops slowly under the action of the gravitational force. During this process, a generator is driven to generate electricity, converting a portion of the gravitational potential energy into electrical energy, such that the light emission lasts for about half an hour. Although the gravity light is an example of application of using gravity to generate electricity, it cannot continuously provide electricity. Therefore, further research and development in methods and devices using gravity to provide continuous generation of electricity are necessary.

### SUMMARY OF THE INVENTION

To solve the above problems, it is an objective of the present invention to provide a gravity-driven electricity generating device which utilizes a change in the centers of gravity of two power units to form two powers for repeatedly pivoting a pressing board of a pivotal module, thereby enabling a generator to generate electricity.

It is another objective of the present invention to provide a power unit for a gravity-driven electricity generating device. The power unit can swing through a change in the center of gravity, repeatedly pivoting a pressing board of a pivotal module, thereby enabling rotation of a generator for generating electricity.

It is a further objective of the present invention to provide a method for generating electricity using gravity, which utilizes two power units to repeatedly form two powers for repeatedly pivoting a pivotal module, enabling rotation of a generator for generating electricity.

Directional terms or similar terms used herein have reference to the pivoting direction of the swaying frame, wherein the terms "left" and "right" indicate the Y direction, the terms "front" and "rear" indicate the X direction, and the terms "up (top)" and "down (bottom)" indicate the Z direction; or have reference to the direction of the accompanying drawings. Each of the directional and similar terms is utilized only to facilitate describing and understanding each embodiment of the present invention, rather than restricting the invention.

As used herein, the term "external force" may include repeated power caused by collision of components or repeated power caused by a component colliding with an elastic element, or a pulling power caused by returning of an elastic element, or a repulsive force caused by two magnetic elements approaching each other, or discontinuous accidental force provided by other equipment.

As used herein, the term "power" refers to the force formed by conversion of the gravitational potential energy of a swaying frame into the rotational energy of the pivotal movement of the swaying frame whose center of gravity is moved during rotation.

As used herein, the term "first side" of the swaying frame relates to a pivoting axis of the swaying frame, which pivoting axis divides the swaying frame into two sides, with the "first side" being a side on which the center of gravity of the swaying frame locates, and with the "second side" being another side of the swaying frame.

As used herein, the "first swaying frame" and "second swaying frame" enable the "pivotal module" to rotate in a first direction and a second direction, respectively, wherein the "first swaying frame" pivoting in the first direction is reverse to the "pivotal module" pivoting in the first direction, and wherein the "second swaying frame" pivoting in the first direction is reverse to the "pivotal module" pivoting in the second direction. For example, the "first swaying frame" pivoting in the first direction is the clockwise direction, the pivotal module pivots in the first direction is the counterclockwise direction, the "second swaying frame" pivoting in the first direction is the counterclockwise direction, and the pivotal module pivoting in the second direction is the clockwise direction.

As used herein, the term "first position" refers to the extreme position of the swaying frame in the second direction.

As used herein, the term "second position" refers to the extreme position of the swaying frame in the first direction.

As used herein, the "abutting portion" of the swaying frame is used to output the above-mentioned power, including the "abutting portion" contacting with a first end or a second end of a pressing board to lower the first end or the second end of the pressing board, or the "abutting portion" includes two magnetic elements which provide a repulsive force to lower the first end or the second end of the pressing board when the two magnetic elements approach each other.

As used herein, the pivotal movement of the "pivotal module" may enable a generator to rotate for generating electricity. The generator may be, but not limited to, a seesaw type permanent magnet driven generator disclosed in Taiwan Patent No. 1691148.

As used herein, the term "a", "an" or "one" for describing the number of the elements and members of the present invention is used for convenience, provides the general meaning of the scope of the present invention, and should be interpreted to include one or at least one. Furthermore, unless explicitly indicated otherwise, the concept of a single component also includes the case of plural components.

As used herein, the term "engagement", "coupling", "assembly", or similar terms is used to include direct connection or pivotal connection between two components as well as indirect connection or pivotal connection between the two components via another component, which can be selected by one having ordinary skill in the art according to the installation needs.

A gravity-driven electricity generating device according to the present invention includes a pivotal module, a first power unit, and a second power unit. The pivotal module includes a pressing board pivotable about a pivot. The first power unit includes a first swaying frame. A first external force is provided to pivot the first swaying frame from a first position to a second position to output a first power, thereby moving a first end of the pressing board downward and moving a second end of the pressing board upward to pivot in a first direction. The second power unit includes a first swaying frame. A second external force is provided to pivot the second swaying frame from a first position to a second position to output a second power, thereby moving the first end of the pressing board upward and moving the second end of the pressing board downward to pivot in a second direction. Upward movement of the first end of the pressing board causes the first swaying frame to pivot in the second direction to the first position, and a first external force module provides the first external force. Downward movement of the second end of the pressing board causes the second swaying frame to pivot in the second direction to the first position, and a second external force module provides the second external force.

A method for generating electricity using gravity according to the present invention includes: providing a first external force to pivot a first swaying frame of a first power unit in a first direction, thereby outputting a first power, with the first power actuating a pivotal module to pivot in the first direction; and providing a second external force to pivot a second swaying frame of a second power unit in the first direction, thereby outputting a second power, with the second power actuating the pivotal module to pivot in the second direction. When the pivotal module pivots in the first direction, the pivotal module further enables the second swaying frame to pivot in the second direction, and wherein when the pivotal module pivots in the second direction, the pivotal module further enables the first swaying frame to pivot in the second direction, thereby repeatedly pivoting the pivotal module to enable rotation of a generator for generating electricity.

Thus, with the gravity-driven electricity generating device and the method for generating electricity using gravity according to the present invention, by pivotal movement of the swaying frame of each of the first power unit and the second power unit, the center of gravity of the swaying frame can be shifted, and the gravitational potential energy of the swaying fame is converted into the rotational power for the pivotal movement, thereby driving a respective pivotal module to pivot repeatedly. Furthermore, the power enables the center of gravity of the swaying frame of the other power unit to shift in the second direction, and two external force modules provide an external force to actuate the swaying frames of the two power units to pivot in the first direction. This enables rotation of a generator for generating electricity, thereby providing a green power generation.

In an example, the first swaying frame and the second swaying frame are disposed symmetrically on two sides of the pivotal module. When each of the first swaying frame and the second swaying frame pivots in the first direction, an abutting portion of each of the first swaying frame and the second swaying frame outputs a respective one of the first power and the second power to a respective one of the first and second ends of the pressing board, thereby pivoting the pressing board in a respective one of the first direction and the second direction. Therefore, the first power unit and the second power unit can respectively provide a first power and a second power to the first end and the second end of a pressing board of the pivotal module, causing pivotal movement of the pressing board about a pivot, thereby enabling a generator to rotate continuously for generating electricity.

In an example, each of the first swaying frame and the second swaying frame includes an extension frame. When each of the first swaying frame and the second swaying frame pivots in the second direction, the two extension frames respectively approaching or colliding with the first and second external force modules, thereby providing the first external power and the second external power. Therefore, with the external force module providing an external force, the swaying frame may pivot in the first direction, and the center of gravity of the swaying frame shifts from the first side to the second side of the swaying frame due to unbalance, assuring that the swaying frame can pivot rapidly in the first direction.

In an example, each of the first and second external force modules includes at least one elastic element to provide the first external force or the second external force. Therefore, with returning of the elastic element providing an external force, the swaying frame may pivot in the first direction, and the center of gravity of the swaying frame shifts from the first side to the second side of the swaying frame due to unbalance, assuring that the swaying frame can pivot rapidly in the first direction.

In an example, each of the first and second external force modules and the extension frames includes at least one magnetic member. The magnetic members of the first and second external force modules and the extension frames form a repulsive force to provide the first external force or the second external force. Therefore, with the magnetic elements forming a repulsive force to provide an external force, the swaying frame may pivot in the first direction, and the center of gravity of the swaying frame shifts from the first side to the second side of the swaying frame due to unbalance, assuring that the swaying frame can pivot rapidly in the first direction.

The gravity-driven electricity generating device may further comprise two pre-push modules disposed between the first power unit and the second power unit. Each of the first and second swaying frames includes a sliding track and a sliding member. Each of the two pre-push modules incudes a driving member pivotable about a pivotal center. Each driving member has a push portion on an end thereof and a pressed portion on another end thereof. The two push portions are configured to abut the two sliding members. The two pressed portions are configured to be abutted by abutting portions of the first and second swaying frames. Therefore, the power provided through the pivotal movement of the swaying frame can be partially released stage by stage. Aside from providing abutment of the abutting portion against the pressing board of the pivoting module to enable rotation of a generator for generating electricity, the sliding member enables the swaying frame of the other power unit to pivot more easily in the second direction due to the first-stage movement,.

In an example, each of the two sliding members of the first and second swaying frames includes an extension member. Each of the first and second swaying frames includes a sliding track having a linking rod on an end or a bottom thereof. Each linking rod includes at least one auxiliary abutting portion configured to abut a respective one of the pressed portions. Therefore, by abutting the pressed portion with the at least one auxiliary abutting portion, the two push portions at the other end of the driving member can uniformly abut the extension member, assuring first-stage upward movement of the sliding member.

In an example, the pivotal module includes a first pivotal module and a second pivotal module. The pressing board includes a first pivotal portion and a second pivotal portion. Both the first pivotal portion and the second pivotal portion are located on a bottom side of the pressing board. The first pivotal portion and the second pivotal portion are located on two sides of a center of the pivotal module. The first pivotal portion pivots about a pivot of the first pivotal module. The second pivotal portion pivots about a pivot of the second pivotal module. Therefore, during pivotal movement of the pressing board, due to the change of the pivotal portion and the pivot which changes the ratio of the force arms on two sides of the pivot, a larger returning torque can be formed to allow smoother pivotal movement of the pressing board.

The gravity-driven electricity generating device according to the present invention may further include a third power unit and a fourth power unit. The third power unit includes a third swaying frame. A third external force is provided to pivot the third swaying frame from a first position to a second position to output a third power, thereby moving the first end of the pressing board downward and moving the second end of the pressing board upward to pivot in a first direction. The fourth power unit includes a fourth swaying frame. A fourth external force is provided to pivot the fourth swaying frame from a first position to a second position to output a fourth power, thereby moving the first end of the pressing board upward and moving the second end of the pressing board downward to pivot in a second direction. The first swaying frame and the third swaying frame are adjacent to each other and have a first actuating member therebetween. The second swaying frame and the fourth swaying frame are adjacent to each other and have a second actuating member therebetween. Each of the first actuating member and the second actuating member pivots about an axle. During pivotal movement of each of the first, second, third, and fourth power units from the second position to the first position, an extension frame of each of the first, second, third, and fourth swaying frames actuates a respective one of the first and second actuating members to pivot, assisting in pivotal movement from the first position to the second position of an associated one of the first, second, third, and fourth swaying frames of an adjacent one of the first, second, third, and fourth power units. Therefore, the four power units of the gravity-driven electricity generating device according to the present invention operate in sequence to provide interlocking motion, which enables accurate sequential movement of the four power units for rotation of a generator for generating electricity, thereby further enhancing the smoothness and efficacy of rotation of the generator for generating electricity.

The gravity-driven electricity generating device according to the present invention may further include a first frame and a second frame. The first is frame in a form of a substantially rectangular hollow frame. The first frame includes a first end and a second end. The second end of the first frame is coupled with the second end of the pressing board of the pivotal module. The first end of the first frame includes a first guiding board having a first guiding portion and a second guiding portion having an end connected to the first guiding portion. Another end of the second guiding portion forms a free end. The second frame is in a form of a substantially rectangular hollow frame. The second frame includes a first end and a second end. The first end of the second frame is coupled with the first end of the pressing board of the pivotal module. The second end of the second frame includes a second guiding board having a first guiding portion and a second guiding portion having an end connected to the first guiding portion. Another end of the second guiding portion forms a free end. The first frame and the second frame are arranged in an X-shaped arrangement. Therefore, when the abutting portion of the swaying frame comes in contact with the first guiding board or the second guiding board, the engaging portion of the first frame or the second frame can form a pivot-like structure causing slight downward bending deformation at the other end. Thus, the power can be partially stored, and the stored portion assists in pivotal movement of the swaying frame in the second direction.

A power unit for a gravity-driven electricity generating device according to the present invention includes a base and a swaying frame. The base includes a fulcrum. The swaying frame includes a pivotal portion to abut and pivot about the fulcrum defining a pivotal center. The swaying frame includes a center of gravity. The swaying frame defines a first side and a second side on two sides of the pivotal center. The center of gravity of the swaying frame forms a first position on the first side. When the swaying frame pivots in the first direction, the center of gravity moves from the first side to a second side of the swaying frame to form a second position and to output a power.

Therefore, in the power unit of the gravity-driven electricity generating device according to the present invention, by the pivotal movement of the swaying frame, the gravitational potential energy can be converted into rotational energy to output a power for pivoting a swinging module, thereby enabling rotation of a generator for generating electricity.

The power unit for the gravity-driven electricity generating device according to the present invention may further include an external force module. The external force module includes at least one elastic element or at least one magnetic member, such that the swaying frame collides with or approaches the external force module, thereby providing an external force to pivot the swaying frame in the first direction. Therefore, the at least one elastic element or the at least one magnetic member can provide an external force to enable pivotal movement of the swaying frame in the first direction.

In an example, the swaying frame includes an extension frame configured to collide with or approach the external force module, thereby providing the external force. Therefore, an external force can be provided through collision with or approaching the external force module, thereby providing an external force to enable pivotal movement of the swaying frame in the first direction.

In an example, the swaying frame includes a balancing weight fixed to the extension frame. Therefore, by changing the position of the balancing weight, the center of gravity of the swaying frame can be rapidly shifted to the second side, such that the swaying frame can pivot rapidly and output a larger power.

In an example, the swaying frame includes a sliding track and a sliding member. The sliding member is movable in a preset range on the sliding track. When the swaying frame pivots in the first direction, the sliding member displaces to shift the center of gravity of the swaying frame from the first side to the second side. Therefore, by displacement of the sliding member, the center of gravity of the swaying frame can be rapidly shifted to the second side, such that the swaying frame can pivot rapidly and output a larger power.

In an example, the sliding track extends outward from the second side of the swaying frame. An abutting portion is formed on at least one of an edge and a bottom side of the sliding track which extends outward. Therefore, the frictional force between the abutting portion and the pressing board can be reduced to reduce loss of energy.

In an example, the sliding track includes a first sliding track and a second sliding track. The first sliding track is located on the second side of the swaying frame. The second sliding track is located on the first side of the swaying frame. The sliding member includes a first sliding member and a second sliding member. The first sliding member is slidable on the first sliding track. The second sliding member is slidable on the second sliding track. Therefore, through displacement of the two sliding members, the center of gravity of the swaying frame can rapidly shift between the first side and the second side, such that the swaying frame can achieve effects of rapid pivoting, output of a larger power, and returning movement.

in an example, the first sliding member is provided with a returning element. Therefore, the returning element enables easy returning of the first sliding member.

The power unit for the gravity-driven electricity generating device according to the present invention may further comprise at least one auxiliary external force module each including a rectilinear track fixed on the base. The rectilinear track provides reciprocal sliding movement for a linear bearing. Two ends of an elastic element are fixed on the linear bearing and the second sliding member, respectively. Therefore, the auxiliary external force module can provide a larger auxiliary external force, such that the swaying frame can more easily pivot in the first direction or the second direction.

In an example, the base includes a first fulcrum and a second fulcrum. The swaying frame includes a first pivotal portion and a second pivotal portion. When the center of gravity of the swaying frame is located on the first side, the swaying frame pivots by the first pivotal portion and the first fulcrum. When the center of gravity of the swaying frame is located on the second side, the swaying frame pivots by the second pivotal portion and the second fulcrum. Therefore, during pivotal movement of the swaying frame, due to the change of the pivotal portion and the pivot which changes the ratio of the force arms two sides of the pivot, a larger torque can be formed to allow smoother pivotal movement of the swaying frame.

In an example, the swaying frame includes a body and a frame having a first side coupled with the body by an engaging member. A second side of the frame abuts the body. The pivotal portion is located on a bottom end of the body. The frame is located on top of the body. Therefore, the swaying frame can pivot easily.

The method for generating electricity using gravity according to the present invention may further includes providing an auxiliary external force to assist in returning of a sliding member, thereby assisting in pivotal movement of the first swaying frame and the second swaying frame in a respective one of the first and second directions. Therefore, the auxiliary external force enables the swaying frame to pivot more easily in the first direction or the second direction.

The method for generating electricity using gravity according to the present invention may further provide an energy-storing mechanism. The first power provided by the first power unit and the second power provided by the second power unit are partially stored in an energy storage module, and wherein the power partially stored in the energy storage module is used to aid pivotal movement of the first swaying frame and the second swaying frame in the second direction. Therefore, the stored partial power enables the first swaying frame and the second swaying frame to pivot more easily in the second direction.

### BRIEF DESCRIPTION OF THE DRAWINGS

The present invention will become more fully understood from the detailed description given hereinafter and the accompanying drawings which are given by way of illustration only, and thus are not limitative of the present invention, and wherein:
FIG. 1 is a schematic view of a gravity-driven electricity generating device of a first embodiment according to the present invention.
FIG. 2 is a schematic view illustrating movement of the gravity-driven electricity generating device of FIG. 1.
FIG. 3 is a partial, exploded, perspective view of a power unit of the gravity-driven electricity generating device of the first embodiment according to the present invention.
FIG. 4 is a partial, exploded, perspective view of a swaying frame of the gravity-driven electricity generating device of the first embodiment according to the present invention.
FIG. 5 is a front elevational view of the power unit of the gravity-driven electricity generating device of the first embodiment according to the present invention after assembly.
FIG. 6 is a schematic view illustrating movement of the power unit of FIG. 5.
FIG. 7 is a schematic view illustrating another movement of the power unit of FIG. 5.
FIG. 8 is a schematic view illustrating movement of the gravity-driven electricity generating device according to the present invention.
FIG. 9 is a front elevational view of a pivotal module of a second embodiment according to the present invention.
FIG. 10 is a schematic view illustrating movement of the pivotal module of FIG. 9.
FIG. 11 is a partial, exploded, perspective view of the power unit of the second embodiment according to the present invention.
FIG. 12 is a cross sectional view of the power unit of the third embodiment according to the present invention after assembly.
FIG. 13 is a schematic view illustrating movement of the power unit of FIG. 12.
FIG. 14 is a schematic view illustrating another movement of the power unit of FIG. 12.
FIG. 15 is a partial, perspective view of a gravity-driven electricity generating device of a second embodiment according to the present invention.
FIG. 16 is a cross sectional view of the partial structure shown in FIG. 15
FIG. 17 is a schematic view illustrating movement of the gravity-driven electricity generating device of FIG. 16.
FIG. 18 is a schematic view illustrating another movement of the gravity-driven electricity generating device of FIG. 16.
FIG. 19 is a perspective view of a pivotal module of a third embodiment according to the present invention.
FIG. 20 is a partial, exploded, perspective view of the pivotal module of the third embodiment according to the present invention.
FIG. 21 is a cross sectional view of the pivotal module of the third embodiment according to the present invention.
FIG. 22 is a partial, cross sectional view of the pivotal module of the third embodiment according to the present invention.
FIG. 23 is a schematic view illustrating movement of the pivotal module of FIG. 22.
FIG. 24 is a schematic view illustrating movement of the pivotal module of FIG. 21.
FIG. 25 is a cross sectional view of the pivotal module of a fourth embodiment according to the present invention.
FIG. 26 is a schematic view illustrating movement of the pivotal module of FIG. 25.
FIG. 27 is a partial, perspective view illustrating coordination of four power units according to the present invention.
FIG. 28 is a schematic elevational view illustrating coordination of the four power units according to the present invention.
FIG. 29 is a top view of the four power units of FIG. 27.
FIG. 30 is a schematic view illustrating movement of the four power units of FIG. 29.

### DETAILED DESCRIPTION OF THE INVENTION

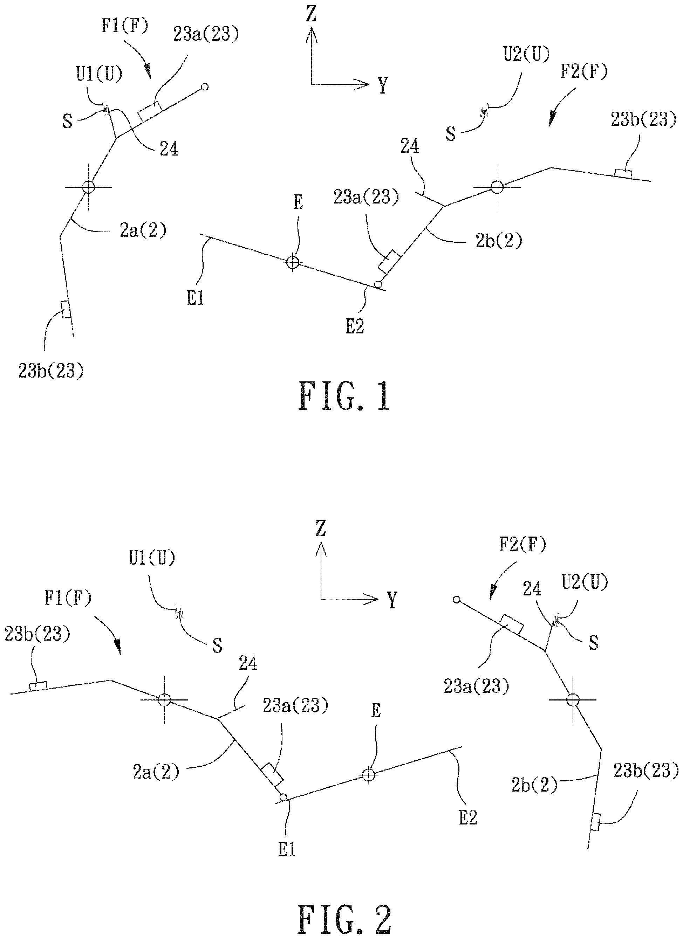

With reference to FIGS. 1 and 2, a gravity-driven electricity generating device of a first embodiment according to the present invention includes a first power unit F1, a second power unit F2, a pivotal module E, and two external force modules U. The first power unit F1 and the second power unit F2 are oppositely disposed to respective provide a first power and a second power to a first end E1 and a second end E2 of a pressing board of the pivotal module E, such that a pivotal portion E4 of the pressing board pivots about a pivot E3. Each of the two external force modules U provides an external force for returning the first power unit F1 and the second power unit F2.

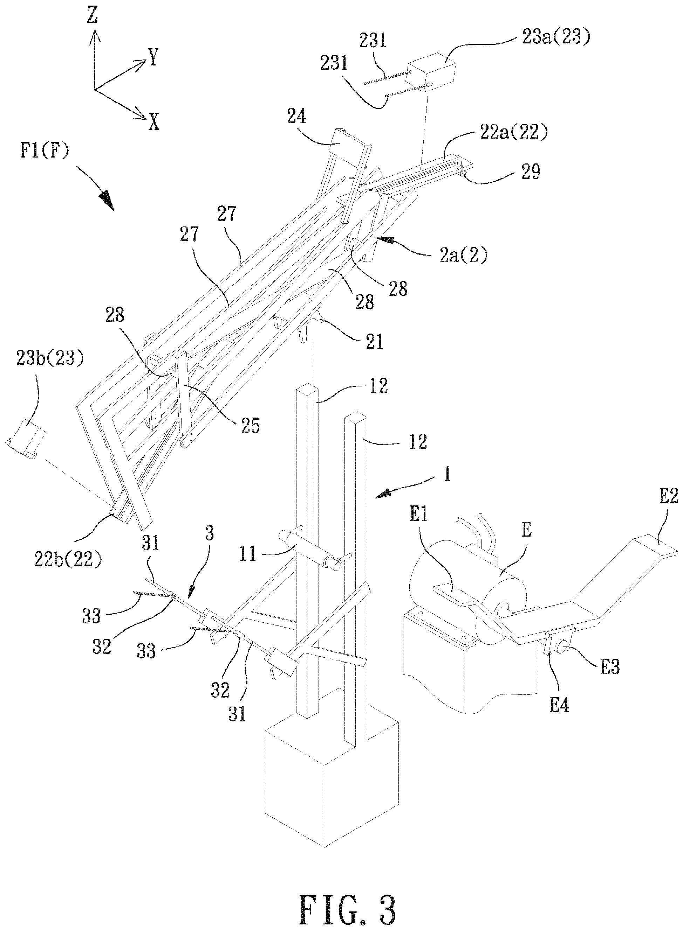

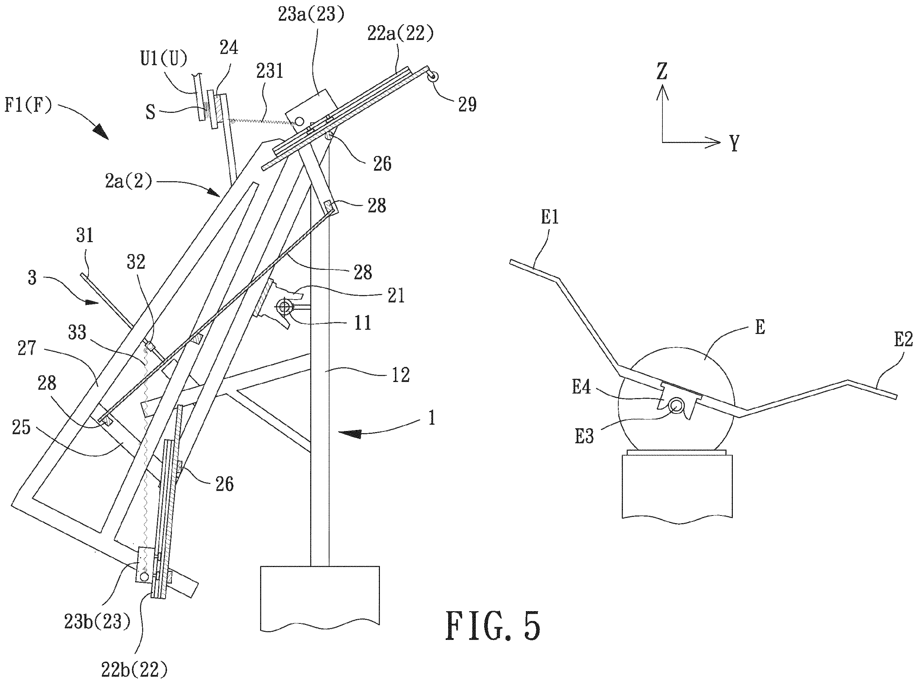

The first power unit F1 and the second power unit F2 according to the present invention may have an identical structure and may be disposed symmetrically on two sides of the pivotal module E with respect to a Y axis. For ease of explanation, an example of a power unit F will be set forth. For example, the power unit F shown in FIGS. 3 and 5 is the first power unit F1.

With reference to FIG. 3 showing a first embodiment of the power unit according to the present invention, the power unit F (F1) includes a base 1 and a swaying frame 2 (2a), the swaying frame 2 (2a) is pivotably mounted to the base 1.

With reference to FIGS. 3 and 5, the base 1 may be a seat or a basic structure of a building. The form of the base 1 is not limited in the present invention as long as the base 1 permits assembly of the swaying frame 2 and reciprocal pivotal movement on a Y-Z plane. The base 1 includes a fulcrum 11 serving as a support for pivotal movement of the swaying frame 2 relative to the base 1, which will be set forth hereinafter. In this embodiment, the base 1 may include two posts 12 extending substantially along Z axis. Furthermore, the two posts 12 may be opposite with respect to X axis. The fulcrum 11 may be in the form of a roller coupling both the two posts 12 or two wheels respectively coupled on the two posts 12. Furthermore, the fulcrum 11 may be located on a left side of the two posts 12 with respect to Y axis (namely, on the left side of FIG. 5).

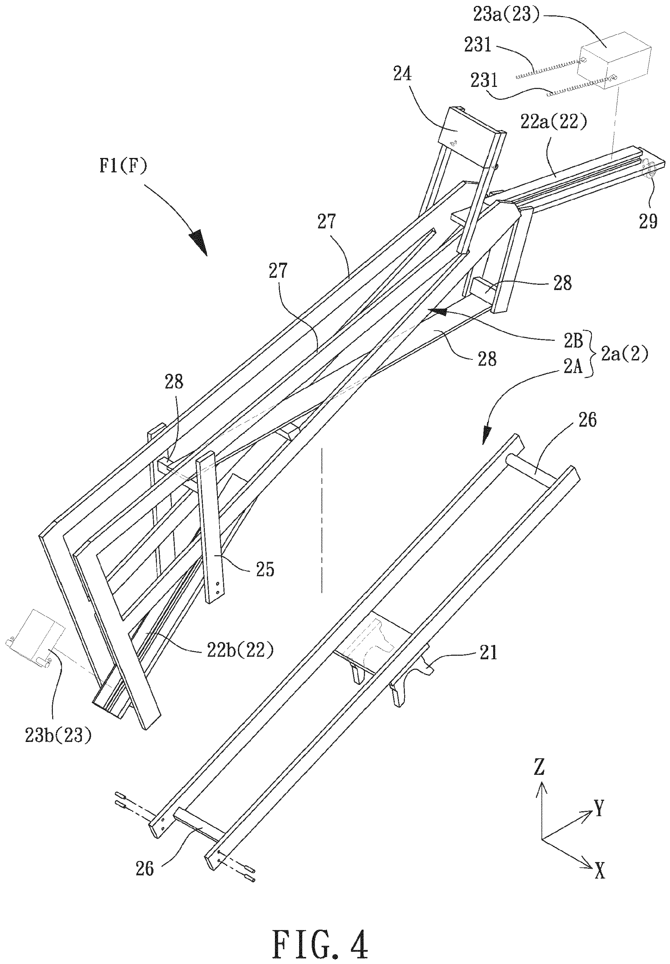

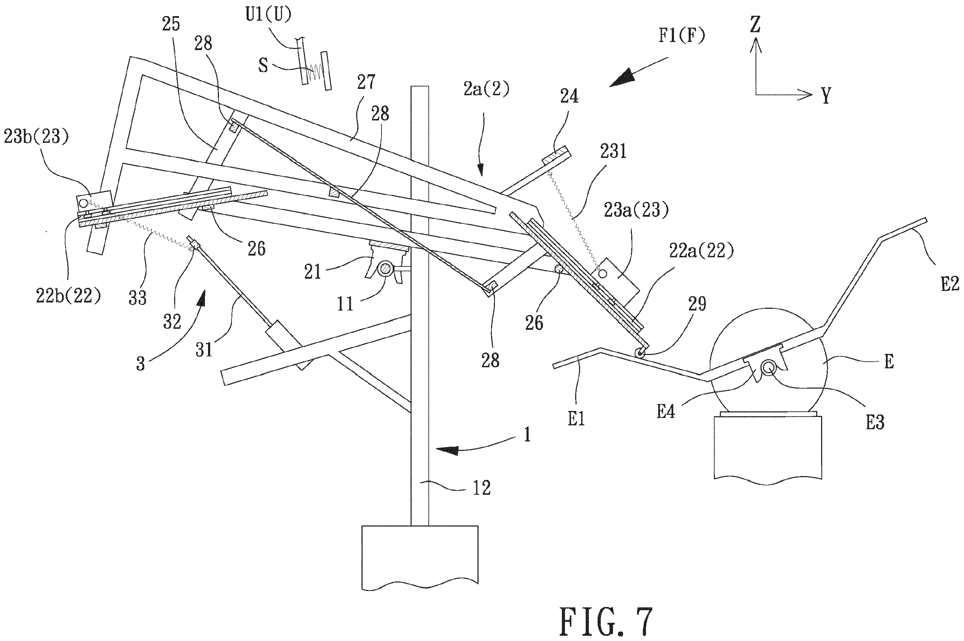

With reference to FIGS. 3 and 4, the swaying frame 2 (2a) includes a pivotal portion 21 for abutting and pivoting about the fulcrum 11 and for serving as a pivotal center of the swaying frame 2 (2a). The swaying frame 2 (2a) includes a center of gravity and defines a first side and a second side on two sides of the pivotal center. The center of gravity is located on the first side of the swaying frame 2 (2a). The second side of the swaying frame 2 (2a) is the other side of the fulcrum 11 with respect to Y axis. Thus, the swaying frame 2 (2a) may pivot to a first position shown in FIG. 5 or a second position shown in FIG. 7. Preferably, the swaying frame 2 (2a) includes a sliding track 22 and a sliding member 23. The sliding member 23 may slide in a preset range on the sliding track 22. In this embodiment, the sliding track 22 extends outward from the second side of the swaying frame 2 with respect to Y axis. Furthermore, an abutting portion 29 may be formed on at least one of an edge and a bottom side of the sliding track 22 which extends outward. The abutting portion 29 may be used to output a power (a first power). The abutting portion 29 may be in the form of at least one roller. Thus, when the abutting portion 29 comes in contact with the first end E1 of the pressing board of the pivotal module E, the pressing board is provided with a downward force, thereby pivoting the pressing board in the first direction. In this embodiment, the abutting portion 29 is in the form of at least one roller to be in rolling contact with the first end E1 of the pressing board of the pivotal module E, thereby reducing energy loss resulting from frictional contact. Alternatively, the roller is disposed on the pressing board and is abutted by the abutting portion 29 of the pivotal frame 2. The present invention is not limited in this regard.

Preferably, the center of gravity of the swaying frame 2 (2a) is located adjacent to a center of the swaying frame 2 (2a), such that the swaying frame 2 (2a) is in a nearly balanced state. Thus, the balance can be destroyed by slightly applying a small pushing force to the first side of the swaying frame 2 (2a). Namely, the swaying frame 2 (2a) can pivot in the first direction by simply pushing the swaying frame 2 (2a) in the first direction, and the sliding member 23 can move away from the fulcrum 11 along Y axis. Thus, the torque in the clockwise direction is increased to shift the center of gravity, such that the center of gravity can shift to the second side, thereby pivoting the swaying frame 2 (2a) in the first direction by the pivotal portion 21 and the fulcrum 11, which, in turns, providing a first power. Preferably, the sliding member 23 is provided with a returning element 231, such as a spring or the like. The returning element 231 can pull the sliding member 23 to enable easy pivotal movement of the swaying frame 2 in the second direction.

Preferably, the sliding track 22 includes a first sliding track 22a and a second sliding track 22b. The first sliding track 22a may be located on the second side of the swaying frame 2. The second sliding track 22b may be located on the first side of the swaying frame 2. The sliding member 23 includes a first sliding member 23a and a second sliding member 23b. The first sliding member 23a is slidable on the first sliding track 22a. The second sliding member 23b is slidable on the second sliding track 22b. Furthermore, the sliding movement of the first sliding member 23a and the second sliding member 23b may be limited in a preset range. Preferably, the mass of the first sliding member 23a is greater than the mass of the second sliding member 23b. Furthermore, the first sliding track 22a and the second sliding track 22b preferably have an angle therebetween. Moreover, when the swaying frame 2 (2a) is in the second position, the second sliding track 22b is below the horizontal plane and still in an inclined state, as shown in FIG. 7. Further, the second sliding member 23b is pulled and retained in place by the elastic element 33. Thus, when the swaying frame 2 (2a) pivots from the second position in the second direction, the second sliding member 23b slides leftward on its own weight. Furthermore, under the gravitational force acting on the second sliding member 23, the second sliding member 23 may provide a pivotal power for pivoting the swaying frame 2 in the second direction. The swaying frame 2 (2a) may further include an extension frame 24 which is preferably located on a higher position of the swaying frame 2 (2a). The extension frame 24 is used to approach or collide with an external force module U to provide an external force.

The form of the swaying frame 2 (2a) is not limited in the present invention. In this embodiment, the swaying frame 2 (2a) includes a body 2A and a frame 2B coupled with the body 2A by an engaging member 25. The pivotal portion 21 may be located on a bottom end of the body 2A for abutting the fulcrum 11 of the base 1. The frame 2B may be located on top of the body 2A. The engaging member 25 may be located on the first side of the frame 2B, and a second side of the frame 2B may abut the body 2A. In this embodiment, the second side of the frame 2B may abut an auxiliary board 26 of the body 2A.

Specifically, the body 2A of this embodiment may be in the form of a substantially rectangular hollow frame, and each of two ends of the body 2A is connected by at least one auxiliary board 26. The frame 2B may include two side boards 27 disposed with respect to X axis. A plurality of positioning boards 28 is disposed between the two side boards 27 and is spaced from each other for fixing the two side boards 27, such that the frame 2B has a strong structure. The first sliding track 22a and the second sliding track 22b extend on Y-Z plane and are located on two ends of the frame 2B. An end of the returning element 231 is fixed to the first sliding member 23a. Another end of the returning element 231 is fixed on the extension frame 24.

With reference to FIGS. 1 and 5, the external force module U (U1, U2) provides an external force to actuate the swaying frame 2 to pivot in the other direction. As shown in FIG. 5, when the swaying frame 2 pivots in the second direction, after the extension frame 24 approaches or collides with the external force module U (U1), the swaying frame 2 (2a) can pivot in the first direction again with an external force provided by at least one elastic element S. In another embodiment, each of the external force modules U (U1, U2) and the extension frames 24 may include at least one magnetic member, and the magnetic members of the external force modules U (U1, U2) and the extension frames 24 form a repulsive force. Thus, each of the external force modules U (U1, U2) provides an external force to assist in pivotal movement of the swaying frame 2 (2a) in the first direction again. Furthermore, the center of gravity of the swaying frame 2 (2a) shifts from the first side to the second side of the swaying frame 2 (2a) due to unbalance. Therefore, the sliding member 23 (23a, 23b) slides instantly to provide assistance in assuring rapid pivotal movement of the swaying frame 2 (2a) in the first direction.

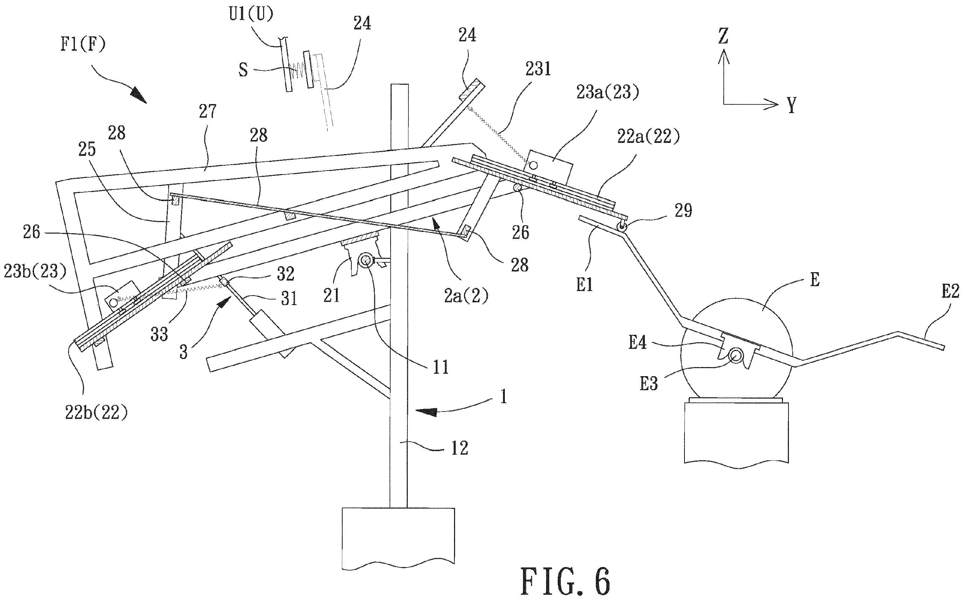

With reference to FIGS. 3 and 5, the present invention may further include at least one auxiliary external force module 3. The at least one auxiliary external force module 3 may provide an auxiliary external force enabling the swaying frame 2 to pivot more easily. For example, the at least one auxiliary external force module 3 includes a rectilinear guiding track 31 having a fixing end fixed to the base 1. The other end of the rectilinear guiding track 31 is a free end. The rectilinear guiding track 31 permits reciprocal sliding movement for a linear bearing 32. An end of an elastic element 33 is fixed to the linear bearing 32, and another end of the elastic element 33 is fixed to the second sliding member 23b. Thus, when the swaying frame 2 is in the first position (as shown in FIG. 5), the second sliding member 23b slides downward under the action of its own weight, such that the linear bearing 32 is located on the fixing end of the rectilinear guiding track 31, and the elastic element 33 is in an elongated state. At this time, the weight of the second sliding member 23b is absorbed by the rectilinear guiding track 31. Thus, when the swaying frame 2 (2a) pivots in the first direction, the elastic element 33 provides an auxiliary external force to pull the second sliding member 23b to slide rightward (as shown in FIG. 6), such that the center of gravity of the swaying frame 2 (2a) shifts rapidly to the second side of the swaying frame 2 (2a), and the swaying frame 2 (2a) can pivot in the first direction more easily.

With reference to FIG. 7, when the swaying frame 2 (2a) is in the second position, since the second sliding track 22b and the first sliding track 22a have an angle therebetween, the second sliding track 22b is not in a horizontal state and is still in an inclined state. At this time, the second sliding member 23b is located on the leftmost end of the second sliding track 22b (as viewed from the drawing sheet). The linear bearing 32 is located on the free end of the rectilinear guiding track 31, and the elastic element 33 pulls the second sliding member 23b without being elongated, such that the center of gravity of the swaying frame 2 (2a) is near the pivotal portion 21 (the fulcrum 11). Thus, the swaying frame 2 (2a) can pivot in the second direction more easily.

FIG. 5 shows the state of the power unit according to the present invention before movement, and the swaying frame 2 (2a) is retained in the first position. At this time, the center of gravity of the swaying frame 2 (2a) is located on the first side of the pivotal portion 21. Namely, the first sliding member 23a (23) can be stopped and positioned on the left side of the first sliding track 22a (22). At this time, the returning element 231 is not elongated. Furthermore, the second sliding member 23b (23) is located at the lowest end of the second sliding track 22b along Z axis. Furthermore, the weight of the second sliding member 23b is absorbed by the rectilinear guiding track 31, such that the elastic element 33 is elongated, and the abutting portion 29 at the second side of the swaying frame 2 (2a) is separate from (not in contact with) the first end E1 of the pressing board of the pivotal module E. Furthermore, the extension frame 24 contacts with or is near the external force module U1 (U).

With reference to FIG. 6, when the extension frame 24 of the swaying frame 2 (2a) approaches or collide with the external force module U1 (U), the external force module U1 (U) provides an external force (initially, the external force is provided by other equipment which can provide discontinuous occasional external force to enable continuous rotation of the power unit F), such that the swaying frame 2 (2a) pivots in the first direction (clockwise direction) with respect to the fulcrum 11. At this time, the center of gravity of the swaying frame 2 (2a) shifts from the first side to the second side, and the sliding member 23 (the first sliding member 23a) rapidly slides rightward, causing pivotal movement of the swaying frame 2 (2a) to form a first power. Furthermore, the abutting portion 29 at the second side of the swaying frame 2 (2a) can press against the first end E1 of the pressing board of the pivotal module E.

With reference to FIG. 7, preferably, since the swaying frame 2 (2a) further includes the second sliding member 23b (23) and the second sliding track 22b, during pivotal movement of the swaying frame 2 (2a) in the first direction, the linear bearing 32 can move from the fixing end to the free end of the rectilinear guiding track 31. Furthermore, the elastic element 33 pulls the second sliding member 23b (23) to slide, causing further pivotal movement of the swaying frame 2 (2a) in the first direction, such that the first power generated by the shifting in the center of gravity of the swaying frame 2 (2a) can be completely released. The first power generated by the pivotal movement enables the abutting portion 29 of the swaying frame 2 (2a) to press against the first end E1 of the pressing board of the pivotal module E, thereby pivoting the pivotal module E in the first direction (counterclockwise direction) to enable rotation of a generator for generating electricity.

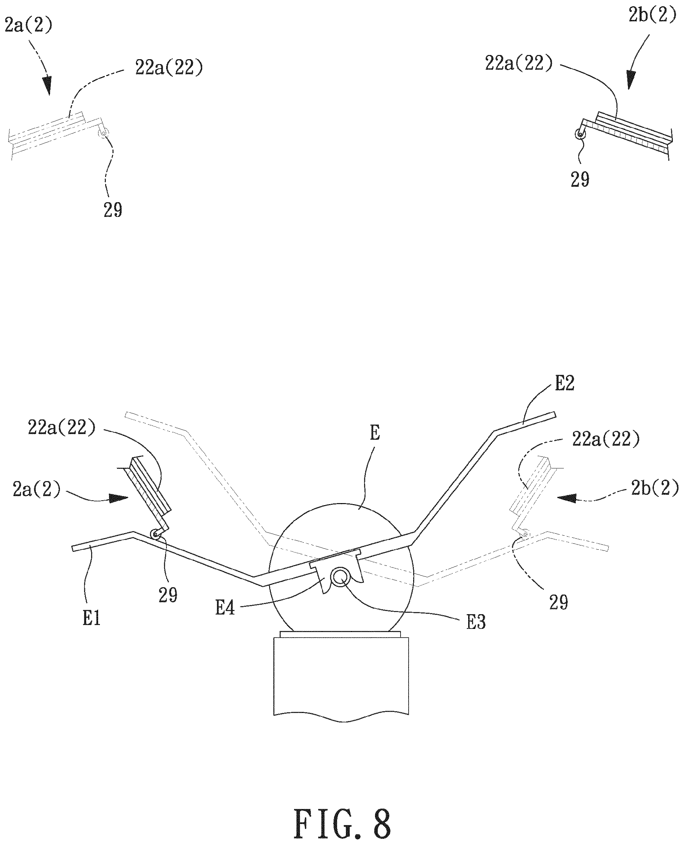

With reference to FIGS. 1 and 8, the first power unit F1 and the second power unit F2 according to the present invention are disposed oppositely to respectively provide a first power and a second power to the first end E1 and the second end E2 of the pressing board of the pivotal module E. Thus, when the swaying frame 2a of the first power unit F1 presses against the first end E1 of the pressing board of the pivotal module E, the second end E2 of the pressing board rises to actuate the swaying frame 2b of the second power unit F2 to pivot in the second direction. Furthermore, when the swaying frame 2b of the second power unit F2 presses against the second end E2 of the pressing board of the pivotal module E, the first end E1 of the pressing board of the pivotal module E rises to actuate the swaying frame 2a of the first power unit F1 to pivot in the second direction.

The pivotal movement of the swaying frame 2a will be set forth in detail hereinafter. Still referring to FIG. 7, when the swaying frame 2a of the first power unit F1 pivots in the first direction to the second position, in addition to the second power resulting from pivotal movement of the swaying frame 2b of the second power unit F2 in the first direction, the first end E1 of the pressing board rises to cause returning pivotal movement of the swaying frame 2a of the first power unit F1 in the second direction (counterclockwise direction), with cooperation of the returning element 231 pulling the first sliding member 23a as well as the second sliding member 23b located on the leftmost end of the second sliding track 22b and its own weight, the swaying frame 2a is provided with an auxiliary external force which assists in pivotal movement of the swaying frame 2a in the second direction, such that the center of gravity of the swaying frame 2a can rapidly return to the first side, and the swaying frame 2a pivots to the first position. At this time, since the extension frame 24 of the swaying frame 2a of the first power unit F1 is near, approaches or collides with the external force module U (U1), the external force module U (U1) provides an external force again to shift the center of gravity of the swaying frame 2a which pivots in the first direction again. Thus, by the first power unit F1 and the second power unit F2 respectively providing the first power and the second power, the pressing board of the pivotal module E can repeatedly pivot to enable rotation of a generator for generating electricity.

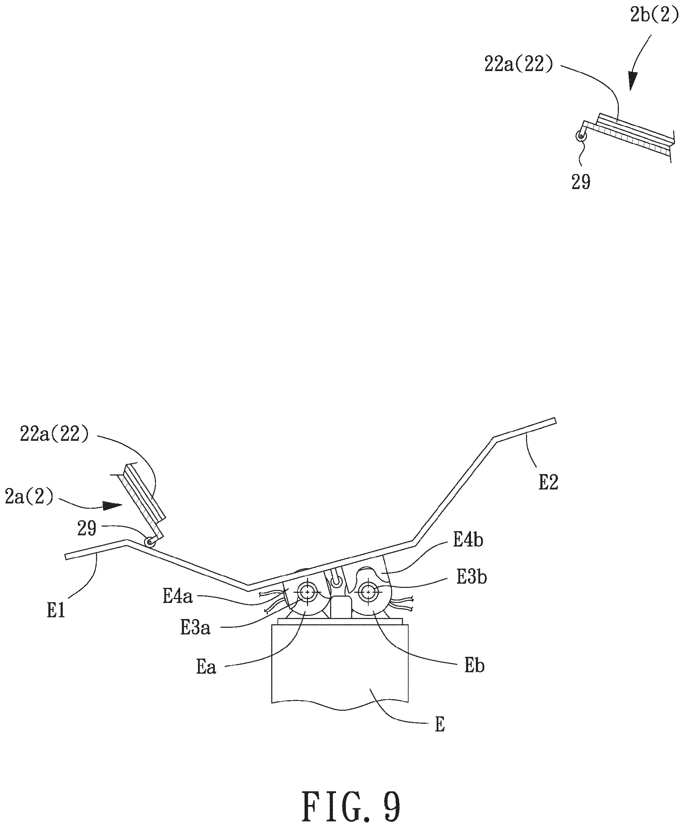

Please refer to FIG. 9 showing a second embodiment according to the present invention. In this embodiment, the pivotal module E includes a first pivotal module Ea and a second pivotal module Eb. The pressing board includes a bottom side having a first pivotal portion E4a and a second pivotal portion E4b. The first pivotal portion E4a and the second pivotal portion E4b are located on two sides of the center of the pivotal module E, respectively. The first pivotal portion E4a pivots about a pivot E3a of the first pivotal module Ea. The second pivotal portion E4b pivots about a pivot E3b of the second pivotal module Eb. The two swaying frames 2 of the two power units F (F1, F2) abut the first end E1 or the second end E2 of the pressing board by at least one abutting portion 29.

With reference to FIG. 9, pivotal movement of the pressing board can only actuate the first pivotal portion E4a to pivot about the pivot E3a in a single direction and actuate the second pivotal portion E4b to pivot about the pivot E3b in a single direction. In an example, the abutting portion 29 of the first swaying frame 2a presses against the pressing board to pivot downward in the first direction (counterclockwise direction), the first pivotal portion E4a is in pivotal connection with the pivot E3a of the first pivotal module Ea, and the second pivotal portion E4b is spaced from and, thus, not in pivotal connection with the pivot E3b of the second pivotal module Eb.

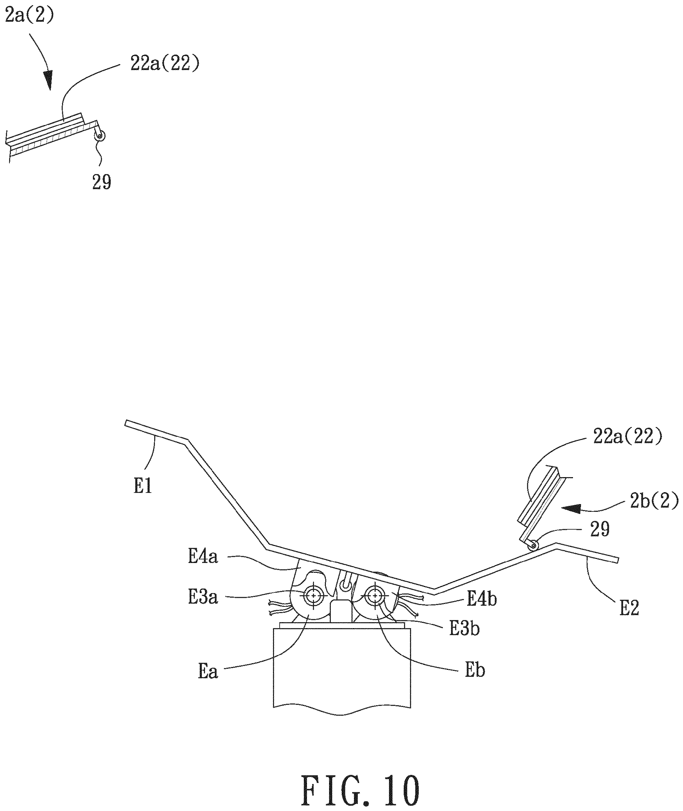

With reference to FIG. 10, when the abutting portion 29 of the second swaying frame 2b presses against the pressing board to pivot downward in the second direction (clockwise direction), at this time, since the pressing board pivots downward (clockwise direction) under pivotal movement of the second pivotal portion E4b about the pivot E3b, the second pivotal portion E4b is in pivotal connection with the pivot E3b of the second pivotal module Eb, and the first pivotal portion E4a is spaced from and, thus, not in pivotal connection with the pivot E3a of the first pivotal module Ea. Thus, during pivotal movement of the pressing board, the force arms on two sides of the pivots E3a, E3b may be changed according to the change in the pivotal portions E4a, E4b and the pivots E3a, E3b, thereby forming a greater returning torque. Thus, the pressing board can permit the swaying frames 2 (2a, 2b) of the two power units F (F1, F2) to proceed returning pivotal movement more easily, thereby increasing the electricity generation efficacy of a generator.

The pivotal module E of the first embodiment or the pivotal module E of the second embodiment according to the present invention can cooperate with the power unit F according to the needs in actual use. The present invention is not limited in this regard. The pivotal module E of the first embodiment will be used for explanation in the following embodiments without specific description.

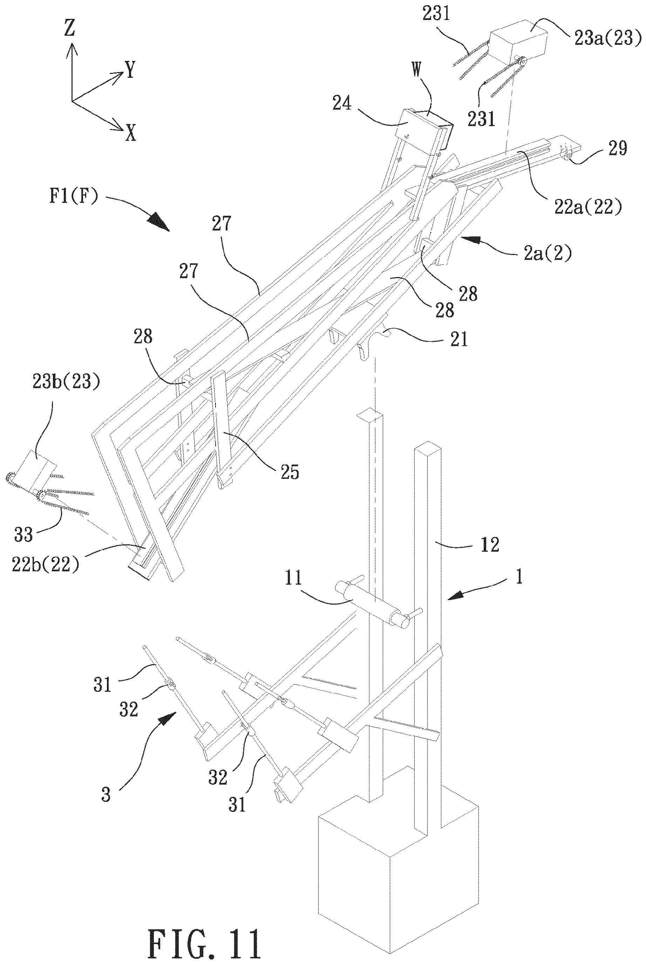

Please refer to FIG. 11 showing a second embodiment of the power unit according to the present invention. In this embodiment, the swaying frame 2 (2a) may further include at least one balancing weight W, such that the pivotal movement of the swaying frame 2 (2a) may form a greater torque. In this embodiment, the swaying frame 2 (2a) includes a balancing weight W which may be fixed on the extension frame 24. As shown in FIG. 5, when the swaying frame 2 (2a) is in the first position, the balancing weight W may be near Z axis of the fulcrum 11. During the pivotal movement of the swaying frame 2 (2a) in the first direction, the balancing weight W can shift rapidly along Y axis. Thus, by the positional change of the balancing weight W, the center of gravity of the swaying frame 2 (2a) can shift rapidly to the second side, such that the swaying frame 2 (2a) can pivot rapidly and form a greater first power (second power).

Furthermore, in this embodiment, two ends of the returning element 231 are fixed on the extension frame 24, and the returning element 231 extends around the first sliding member 23a. Thus, the returning element 231 can provide a stronger returning force. Moreover, there are two sets of the auxiliary external force modules 3 respectively located on two sides of the second sliding member 23b. Using one of the two sets of the auxiliary external force modules 3 for illustration, the auxiliary external force module 3 includes two rectilinear guiding tracks 31 fixed on the base 1. Each rectilinear guiding track 31 provides reciprocal sliding movement for a linear bearing 32. Two ends of an elastic elements 33 are fixed on two linear bearing 32, respectively. Each elastic elements 33 extends around a side of the second sliding track 23b. Thus, each elastic element 33 of each of the two auxiliary external force module 3 can provide a greater auxiliary external force, enabling the swaying frame 2 (2a) to pivot more easily in the first or second direction.

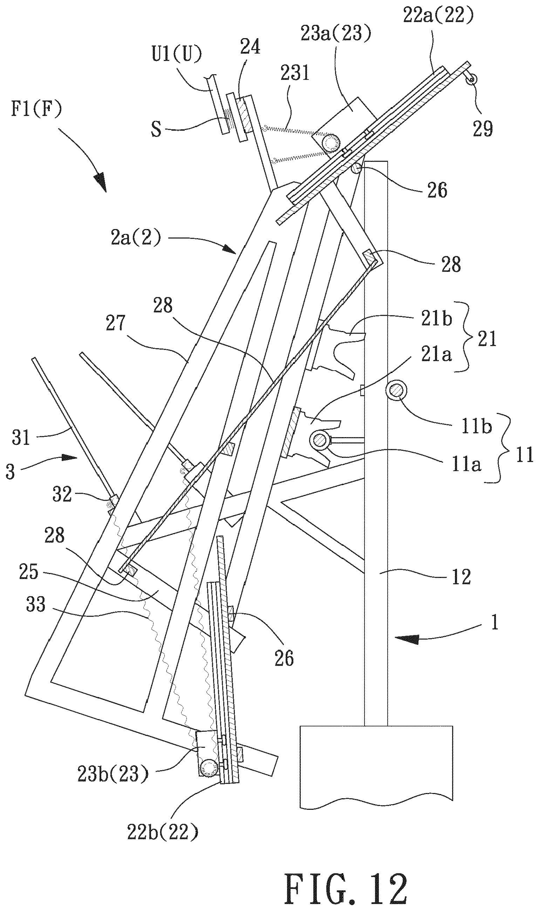

Please refer to FIG. 12 showing a power unit of a third embodiment according to the present invention. In this embodiment, the swaying frame 2 (2a) of the power unit F (F1) may further include two pivotal portions 21 (21a, 21b), and the base 1 includes two fulcrums 11 (11a, 11b), such that when the swaying frame 2 (2a) pivots, a greater torque can be formed by the change in the force arm resulting from a change in the fulcrum 11 (11a, 11b). Thus, the swaying frame 2 (2a) can output a greater power and act on an end of the pressing board of the pivotal module E, such that the other end of the pressing board can actuate the swaying frame 2 (2b) of the other power unit F (F2) to pivot more easily in the second direction. Therefore, the swaying frames 2 (2a, 2b) of the two power units F can pivot rapidly to enhance the electricity generating efficacy of a generator.

Still referring to FIG. 12, the base 1 includes a first fulcrum 11a and a second fulcrum 11b. The swaying frame 2 (2a) includes a first pivotal portion 21a and a second pivotal portion 21b. When the center of gravity of the swaying frame 2 (2a) is located on the first side, the swaying frame 2 (2a) pivots by the first pivotal portion 21a and the first fulcrum 11a.

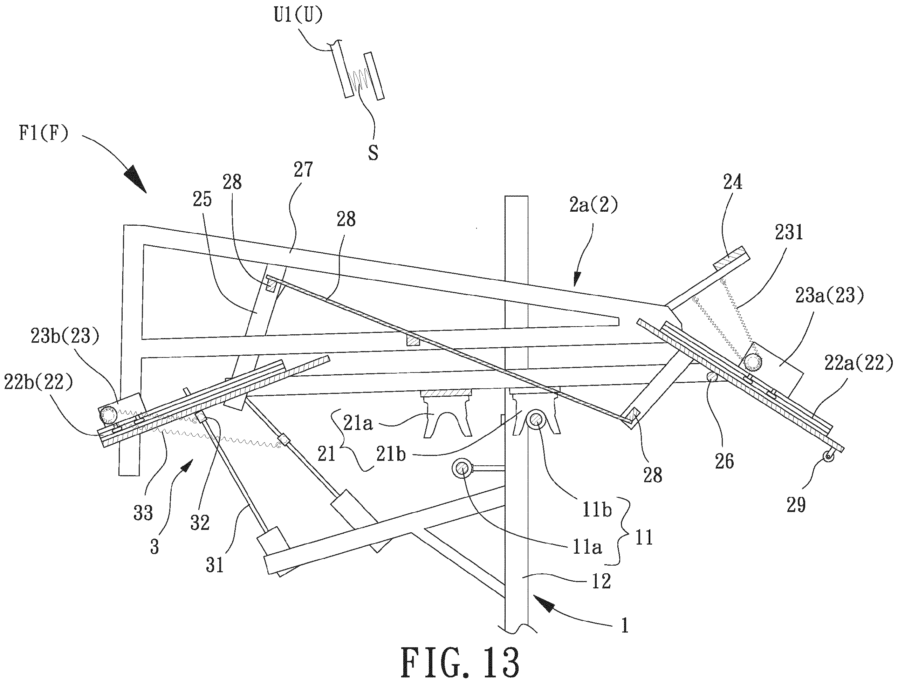

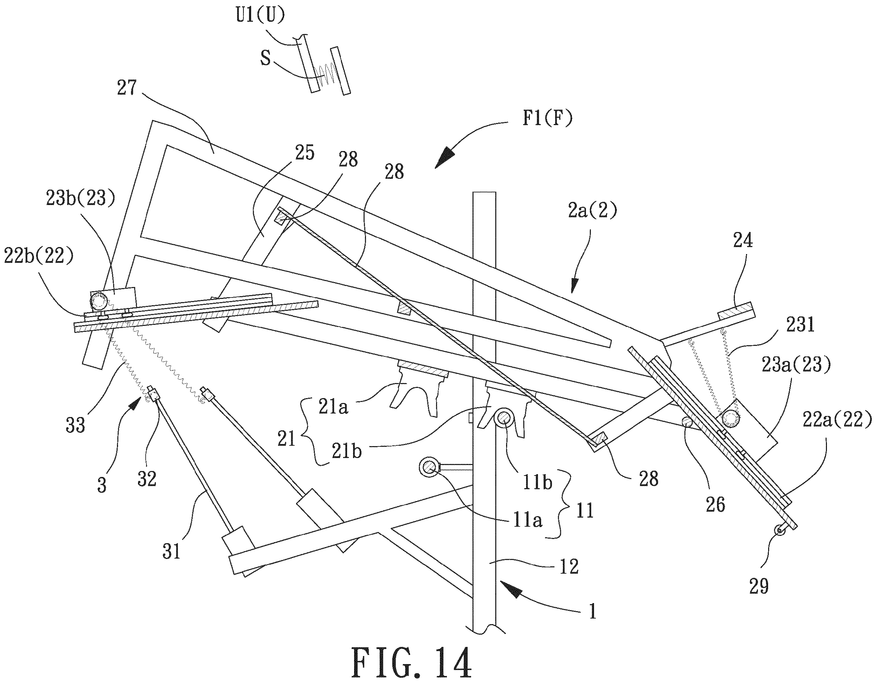

With reference to FIG. 13, during the pivotal movement of the swaying frame 2 (2a) in the first direction, the first pivotal portion 21a will move away from the first fulcrum 11a, and the second pivotal portion 21b will be in pivotal connection with the second fulcrum 11b. At this time, the center of gravity of the swaying frame 2 (2a) will shift rightward along with the pivotal direction, and the swaying frame 2 (2a) continues to pivot (as shown in FIG. 14) under pivotal movement by the second pivotal portion 21b and the second fulcrum 11b until the swaying frame 2 pivots to the second position. Namely, the abutting portion 29 at the second side of the swaying frame 2 (2a) can press against the first end E1 of the pressing board of the pivotal module E, and the second end E2 of the pressing board rises to actuate the swaying frame 2 (2b) of the second power unit F2 to pivot in the second direction.

Still referring to FIG. 13, when the first end E1 of the pressing board rises to actuate the swaying frame 2 (2a) of the first power unit F1 to pivot in the second direction (not shown), since the swaying frame 2 (2a) is in pivotal connection with the second fulcrum 11b by the second pivotal portion 21b, the ratio of the force arms on two sides of the fulcrum 11a, 11b may be changed by the pivotal connection of the swaying frame 2 (2a) with the fulcrum 11a, 11b by the first and second pivotal portions 21a, 21b, thereby forming a greater returning torque. Thus, the swaying frame 2 (2a) can rapidly pivot in the second direction, and the first sliding member 23a can rapidly slide leftward, such that the center of gravity of the swaying frame 2 (2a) can rapidly return to the first side, and the second pivotal portion 21b moves away from the second fulcrum 11b. Furthermore, the first pivotal portion 21a comes in contact with the first fulcrum 11a to continue the pivotal movement, thereby pivotally returning the swaying frame 2 (2a) to the first position.

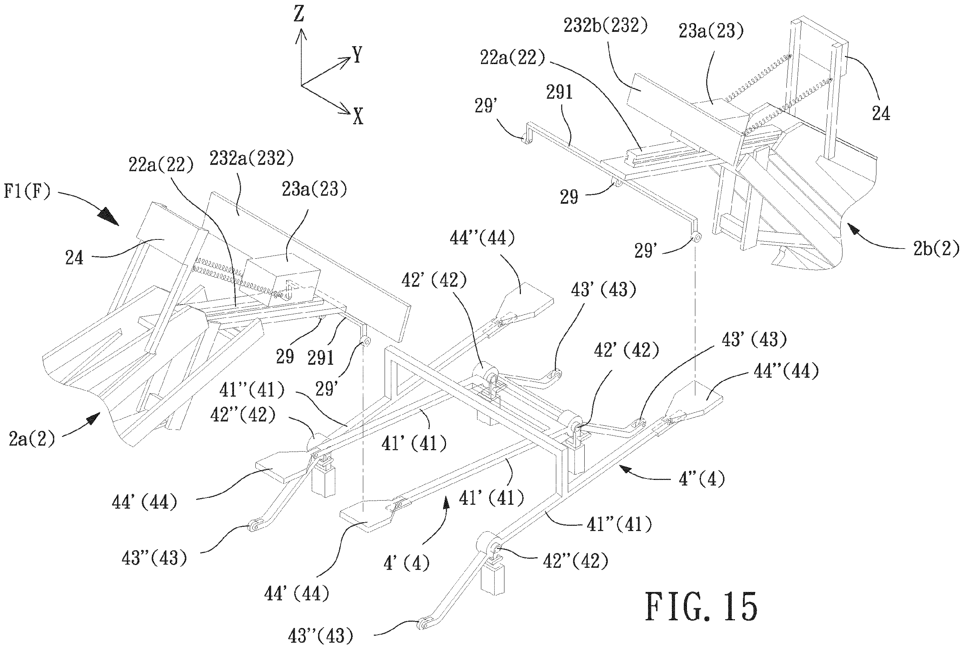

Please refer to FIG. 15 showing the gravity-driven electricity generating device of a second embodiment according to the present invention. In this embodiment, the gravity-driven electricity generating device may further include a pre-push module 4 located between the first power unit F1 and the second power unit F2. The power provided by the pivotal movement of the swaying frame 2 (2a) of a power unit F (F1) can be used to push the sliding member 23 (23a, 23b) of the other power unit F (F2) to form a first stage of the returning movement. Thus, the power (first power, second power) provided by the pivotal movement of the swaying frame 2 (2a, 2b) can be partially released stage by stage to actuate the abutting portion 29 to press against the pressing board of the pivotal module E for rotating a generator for generating electricity. Furthermore, since the sliding member 23 (23a, 23b) has completed the first-stage movement, the swaying frame 2 (2a, 2b) of the other power unit F (F1, F2) can pivot more easily in the second direction.

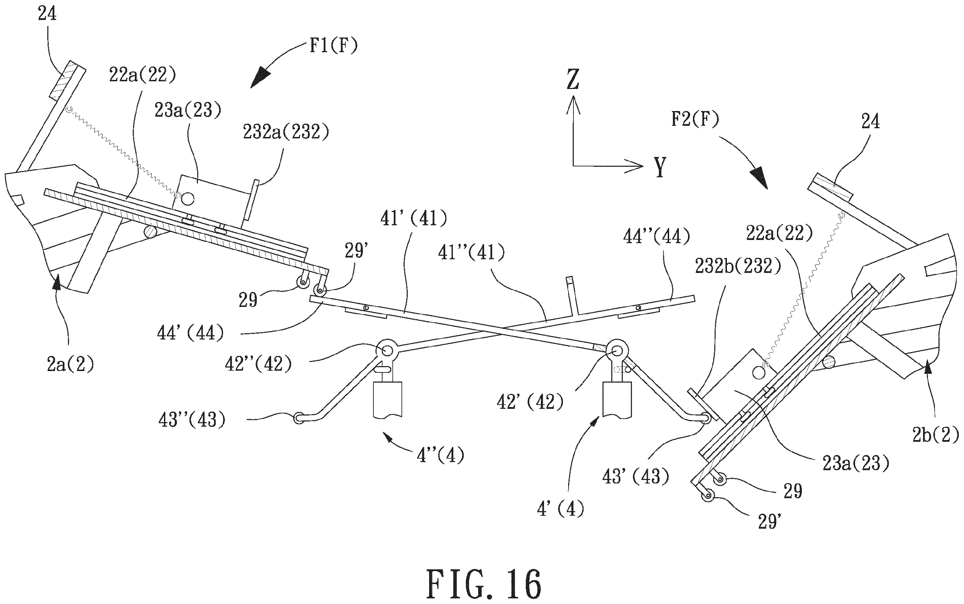

With reference to FIGS. 15 and 16, the pre-push module 4 is located between the first power unit F1 and the second power unit F2. Furthermore, the pre-push module 4 preferably has two sets 4', 4" located on top of the pivotal module E (not shown). Preferably, each of the two sliding members 23 (23a, 23b) of the swaying frame 2 includes an extension member 232 (232a, 232b). Furthermore, in addition to the abutting portions 29 on the two swaying frames 2, the sliding track 22a, 22b of each of the two swaying frames 2a, 2b includes a linking rod 291 on an end or a bottom thereof. Each linking rod 291 includes at least one auxiliary abutting portion 29' which is preferably in the form of a roller. Each pre-push module 4 (4', 4") includes a driving member 41 (41', 41") pivotable about a pivotal center 42 (42', 42"). Each driving member 41 (41', 41") has a push portion 43 (43', 43") on an end thereof and a pressed portion 44 (44', 44") on another end thereof. Each of the two push portions 43 (43', 43") is preferably in the form of a roller. The two push portions 43 are configured to abut the two sliding members 23 (23a, 23b) or the two extension members 232 (232b, 232a). The two pressed portions 44 (44', 44") are configured to be abutted by abutting portions 29 of the auxiliary abutting portions 29' of the two swaying frames 2a, 2b.

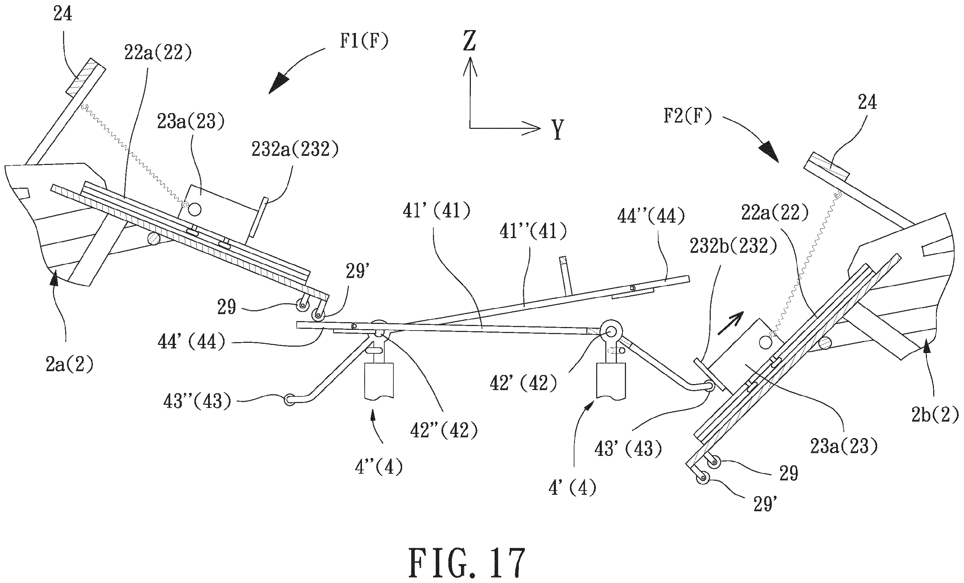

With reference to FIG. 16, in an example of pivotal movement of the swaying frame 2a of the first power unit F1 in the first direction, the auxiliary abutting portion 29' of the swaying frame 2a firstly presses against the pressed portion 44' (44), such that the driving member 41' (41) pivots in the first direction (counterclockwise direction) by the pivotal center 42' (42). Thus, the push portions 43' (43) on the other ends of the driving members 41' (41) can press against the extension member 232b (232) of the swaying frame 2b of the second power unit F2, moving the sliding member 23b of the second power unit F2 upward (as shown in FIG. 17). Thus, the center of gravity of the swaying frame 2b of the second power unit F2 can approach the pivotal portion 21 (fulcrum 11), enabling the swaying frame 2b of the second power unit F2 to pivot more easily in the second direction. Furthermore, when the swaying frame 2a of the first power unit F2 reaches the second position, the abutting portion 29 of the swaying frame 2a can press against the first end E1 of the pressing board of the pivotal module E, such that the pressing board of the pivotal module E pivots in the first direction, enabling rotation of a generator for generating electricity.

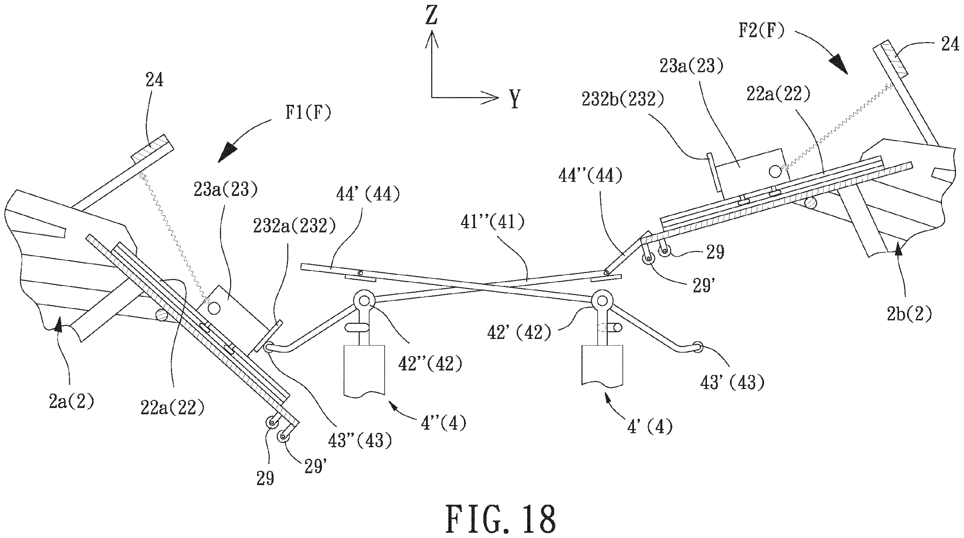

With reference to FIG. 18, similarly, when the swaying frame 2b of the second power unit F2 pivots in the first direction, the auxiliary abutting portion 29' of the swaying frame 2b firstly presses against the pressed portion 44' (44), such that the driving member 41" (41) pivots in the second direction (clockwise direction) by the pivotal center 42" (42). Thus, the push portions 43" (43) on the other ends of the driving members 41" (41) can press against the extension member 232a (232) of the swaying frame 2a of the first power unit F1, moving the sliding member 23a of the first power unit F1 upward. Thus, the center of gravity of the swaying frame 2a of the first power unit F1 can approach the pivotal portion 21 (fulcrum 11), enabling the swaying frame 2a of the first power unit F1 to pivot more easily in the second direction. Furthermore, when the swaying frame 2b of the second power unit F2 reaches the second position, the abutting portion 29 of the swaying frame 2b can press against the second end E2 of the pressing board of the pivotal module E, such that the pressing board of the pivotal module E pivots in the second direction, enabling rotation of a generator for generating electricity.

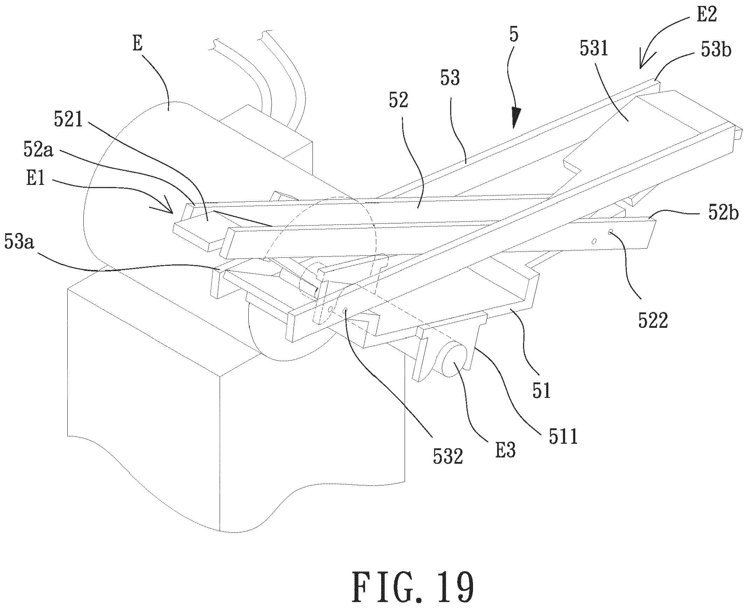

Please refer to FIG. 19 showing a third embodiment of the pivotal module E according to the present invention. In this embodiment, the pivotal module E further includes an energy storage module 5, such that the first power and the second power provided by the first power unit F1 and the second power unit F2 can be stored in and slowly released by the energy storage module 5. Thus, a portion of the first power and a portion of the second power is stored and can be used in assisting in returning of the swaying frames 2 (2a, 2b) of the first power unit F1 and the second power unit F2.

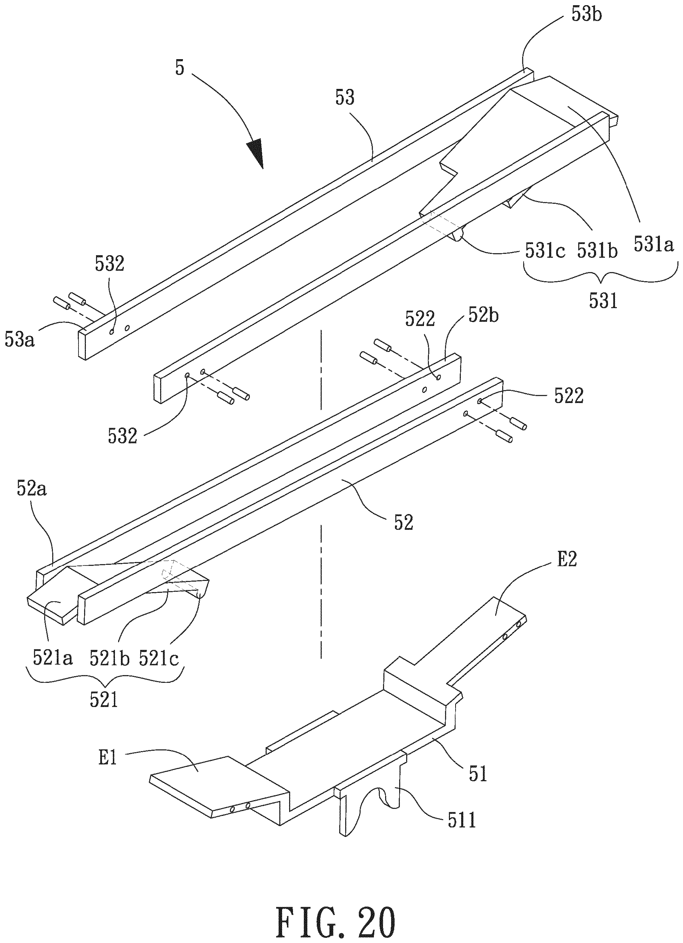

With reference to FIG. 20, the energy storage module 5 includes a pressing board 51, a first frame 52, and a second frame 53. A first pivotal portion 51 of the pressing board 51 is pivotable about a pivot E3 of the pivotal module E. Preferably, the first and second ends E1, E2 of the pressing board 51 extend upward with respect to the pivotal portion 511 at the center.

The first frame 52 may be in the form of a slanted U-shaped frame. The first frame 52 includes a first end 52a and a second end 52b. The second end 52b of the first frame 52 is coupled with the second end E2 of the pressing board 51 by an engaging portion 522. The engaging portion 522 may be welding, screwing connection, or riveting. The present invention is not limited in this regard. The first end 52a of the first frame 52 has a first guiding board 521. The first guiding board 521 may be similar to an inverted V-shaped structure. Thus, the first guiding board 521 includes a first guiding portion 521a, a second guiding portion 521b, and a free end 521c, which are connected to each other. The first guiding portion 521 is configured to be pressed by the abutting portion 29 of the swaying frame 2 of the first power unit F1.

The second frame 53 may be in the form of a slanted U-shaped frame. The second frame 53 includes a first end 53a and a second end 53b. The first end 53a of the second frame 53 is coupled with the first end E1 of the pressing board 51 by an engaging portion 532. The engaging portion 532 may be welding, screwing connection, or riveting. The present invention is not limited in this regard. The second end 53b of the second frame 53 has a second guiding board 531. The second guiding board 531 may be similar to an inverted V-shaped structure. Thus, the second guiding board 531 includes a first guiding portion 531a, a second guiding portion 531b, and a free end 531c, which are connected to each other. The second guiding portion 531 is configured to be pressed by the abutting portion 29 of the swaying frame 2 of the second power unit F2.

The first frame 52 may extend through the hollow portion of the second frame 53. Alternatively, the second frame 53 may extend through the hollow portion of the first frame 52. The present invention is not limited in this regard. In this embodiment, the first frame 52 extends through the hollow portion of the second frame 53, such that the first frame 52 and the second frame 53 are arranged in an X-shaped arrangement.

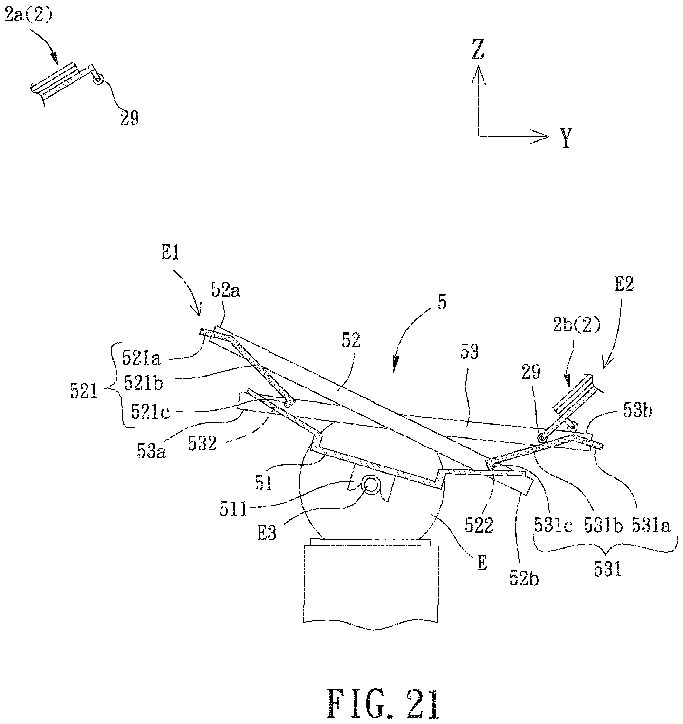

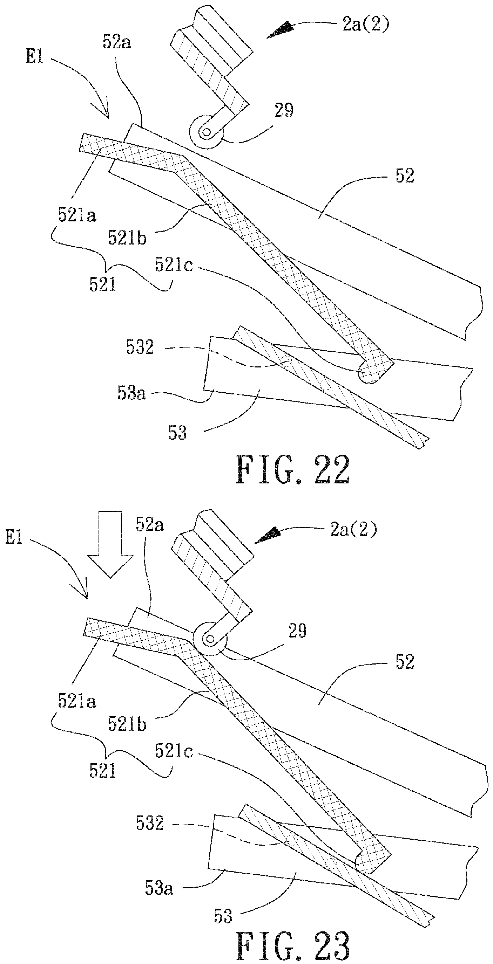

After the energy storage module 5 is assembled, the energy storage module 5 can store a portion of the first power and a portion of the second power. An example of saving a portion of the first power will be set forth hereinafter. With reference to FIGS. 21 and 22, the free end 521c of the first guiding board 521 is separate from and, thus, not in contact with the pressing board 51. At this time, the abutting portion 29 of the swaying frame 2 (2a, 2b) has not contacted with the first guiding board 521 of the energy storage module 5.

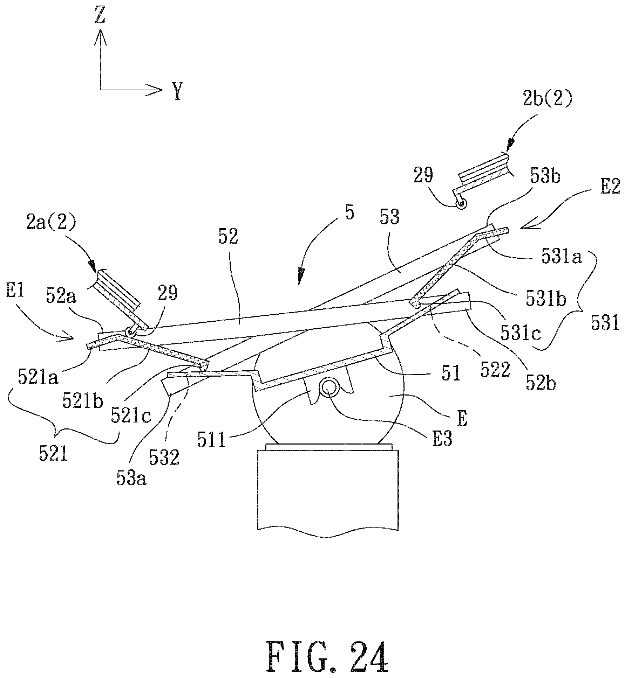

With reference to FIGS. 23 and 24, when the abutting portion 29 of the swaying frame 2 (2a) comes in contact with the first guiding board 521 of the energy storage module 5 due to the first power, the coupling portion 522 acts like a pivot to cause slight downward bending deformation of the first end 52a of the first frame 52. The free end 521c of the first guiding board 521 comes in contact with the first end E1 of the pressing board 52 to cause pivotal movement of the pivotal portion 511 of the pressing board 51 about the pivot E3 in the first direction, enabling rotation of a generator for generating electricity. During the slight downward bending deformation of the first end 52a of the first frame 52, a portion of the first power is stored through the bending deformation of the first frame 52.

With reference to FIG. 24, when the pivotal portion 511 of the pressing board 51 pivots about the pivot E3 in the first direction, the second end E2 of the pressing board 51 rises to push the second swaying frame 2b of the second power unit F2 upward. At the same time of the upward movement of the second swaying frame 2b, the portion of power stored through bending deformation of the second frame 53 is released to return the second frame 53 to the unbent state, thereby assisting in pivotal movement of the swaying frame 2 (2b) in the second direction.

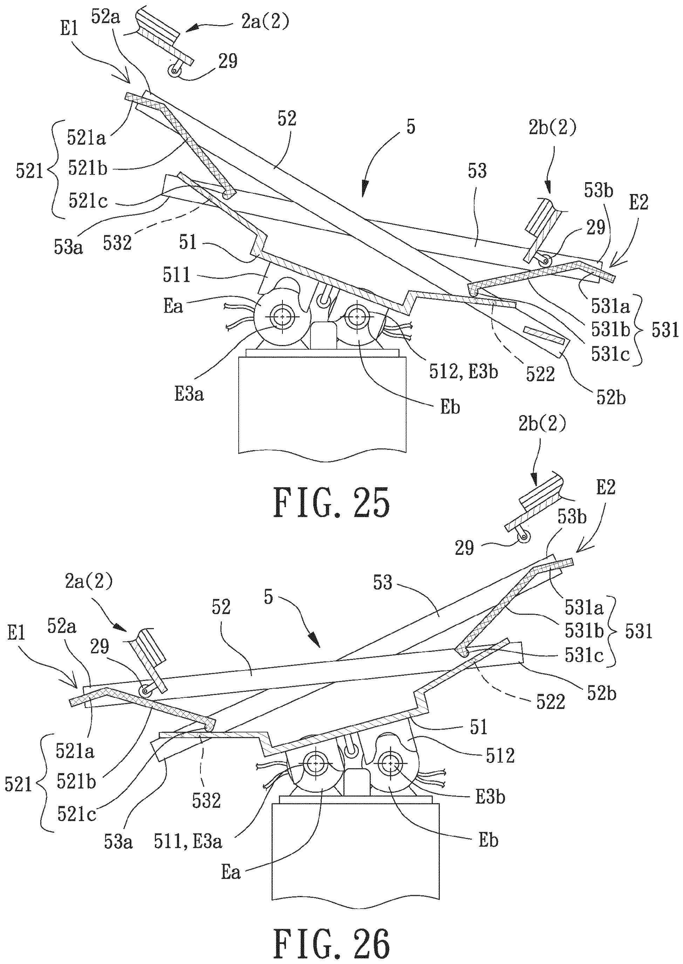

Please refer to FIG. 25 showing a fourth embodiment of the pivotal module according to the present invention. Namely, the use of the energy storage module 5 cooperates with the pivotal module E of the second embodiment is illustrated. In this embodiment, the pivotal module E includes a first pivotal module Ea and a second pivotal module Eb. The pivotal portion 511 of the pressing board 51 can only rotate about the pivot E3a in a single direction, and the pivotal portion 512 of the pressing board 51 can only rotate about the pivot E3b in a single direction. In an example of the abutting portion 29 of the second power unit F2 pressing against the second guiding board 531 of the energy storage module 5 to pivot the pressing board 51 in the second direction (clockwise direction), the pivotal portion 512 is in pivotal connection with the pivot E3b of the second pivotal module Eb, and the pivotal portion 511 is separate from and, thus, not in pivotal connection with the pivot E3a of the first pivotal portion Ea.

With reference to FIG. 26, when the abutting portion 29 of the first swaying frame 2a presses against the first guiding board 521 of the energy storage module 5 to pivot the pressing board 51 in the first direction (counterclockwise direction), the pivotal portion 511 of the pressing board 51 is in pivotal connection with the pivot E3a, such that during the pivotal movement of the pressing board 51, the ratio of the force arms on two sides of the pivots E3a, E3b may be changed by the pivotal connection of the pivotal portions 511, 512 with the pivots E3a, E3b, forming a greater returning torque. Thus, the pressing board 51 enables the swaying frame 2b of the second power F2 to proceed with returning pivotal movement more easily while enhancing the electricity generating efficacy of a generator.

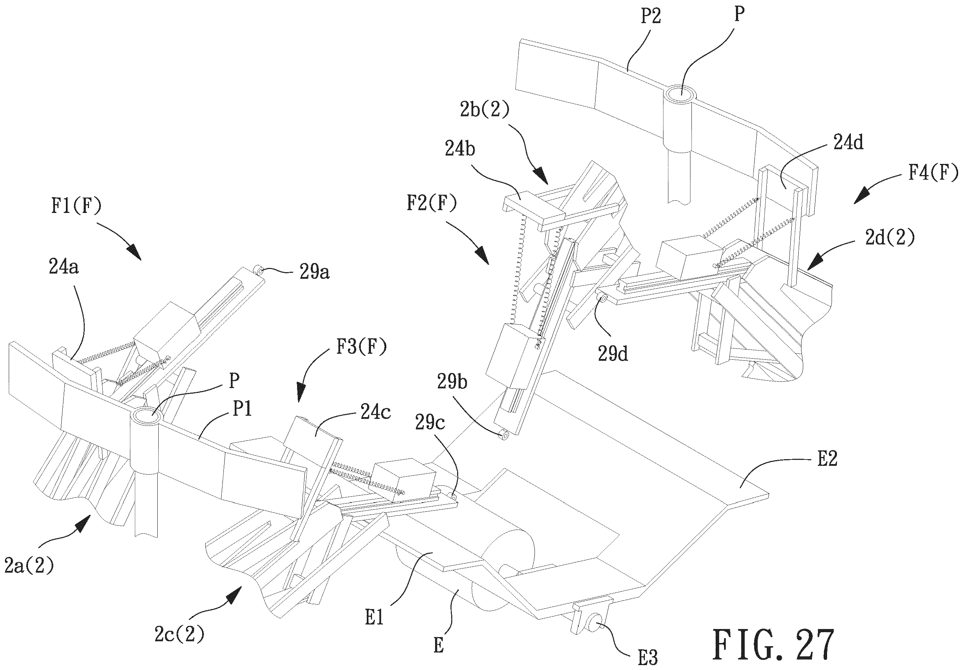

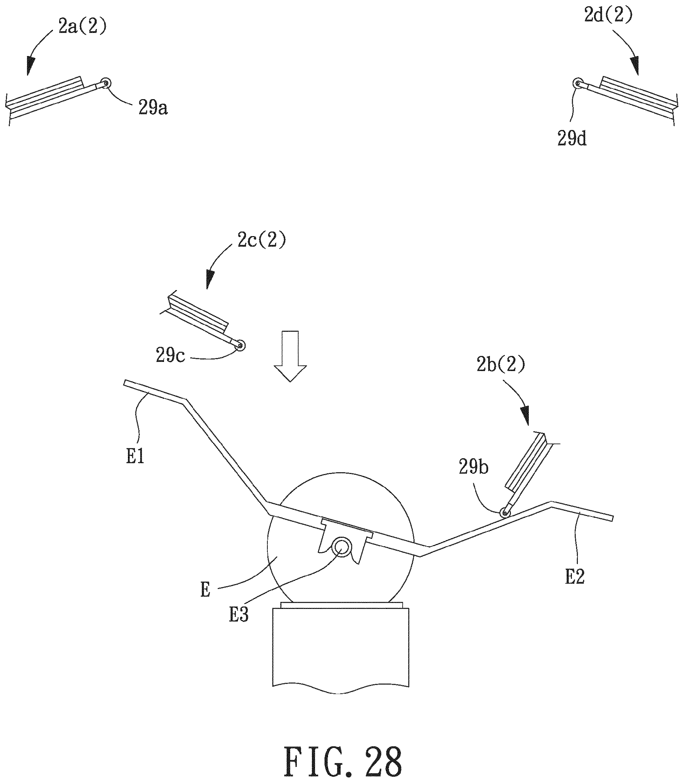

With reference to FIGS. 27 and 28 showing a fourth preferred embodiment of the gravity-driven electricity generating device according to the present invention, four power units F are provided to jointly drive a pivotal module E. Two of the power units F (F1, F3) may be disposed on the first end E1 of the pressing board, and the other two power units F (F2, F4) may be disposed on the second end E2 of the pressing board. The power units F and the pivotal module E may be selected from the structures of each of the above embodiments, which can be easily arranged and replaced by one having ordinary skill in the art. The present invention is not limited in this regard. In this embodiment, the pivotal module E includes a pressing board having a first and E1 and a second end E2, and the pressing board pivots using a pivot E3 as a center, such that the pivot E3 pivots in the clockwise direction or the counterclockwise direction.

For clear and concise description, according to the direction shown in FIG. 27, the power unit F on the upper, left side of the pivotal module E is referred to as the first power unit F1, the power unit F on the upper, right side of the pivotal module E is referred to as the second power unit F2, the power unit F on the lower, left side of the pivotal module E is referred to as the third power unit F3, and the power unit F on the lower, right side of the pivotal module E is referred to as the fourth power unit F4.

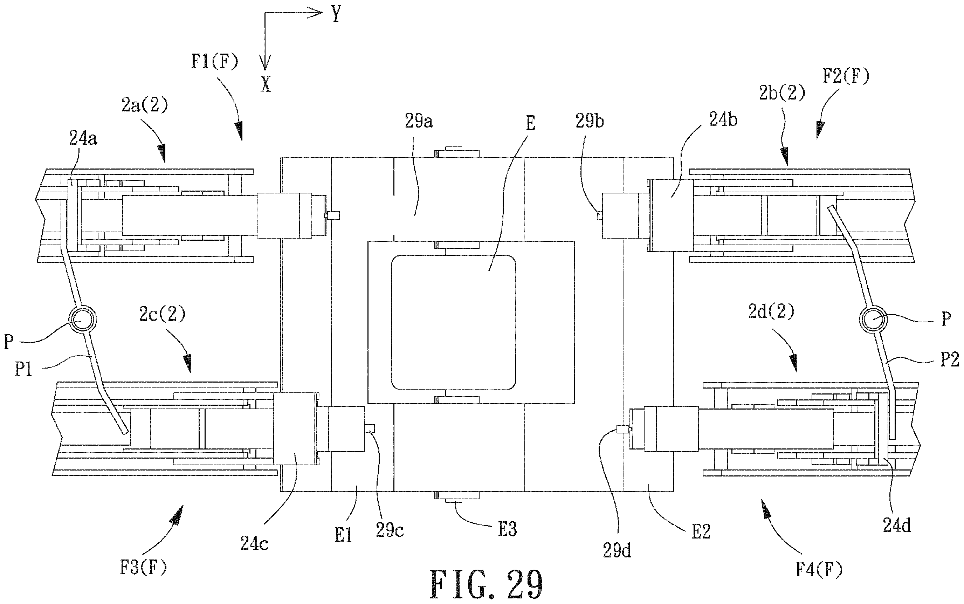

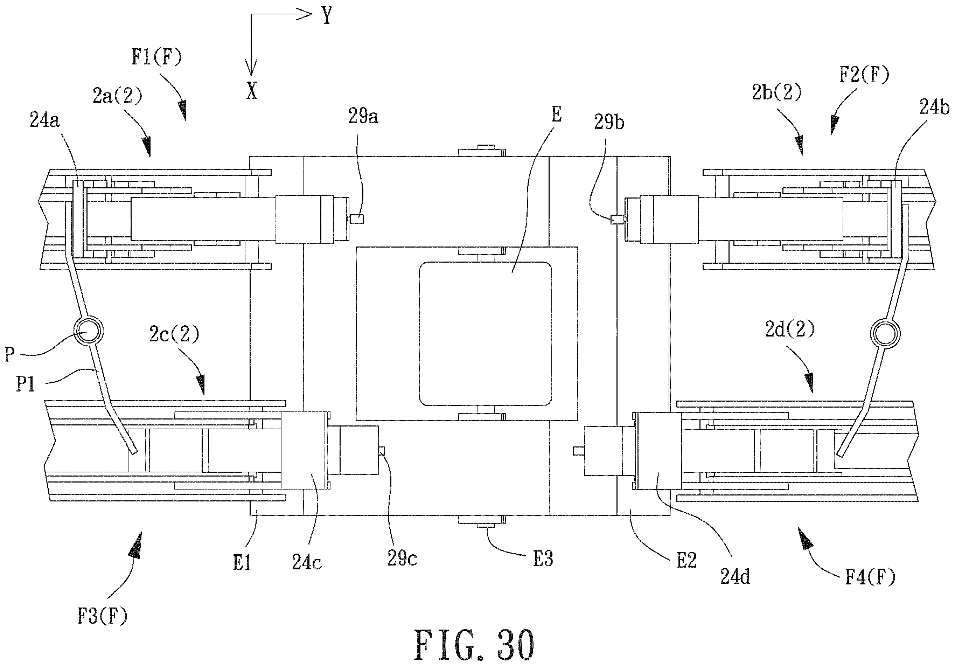

With reference to FIGS. 27, 29 and 30, to further use the reactive force of returning of the swaying frame 2 and to enable each power unit F to operate reliably, the first power unit F1 and the third power unit F3 are adjacent to each other and have a first actuating member P1 therebetween, and the second power unit F2 and the fourth power unit F4 are adjacent to each other and have a second actuating member P2 therebetween. Each of the first actuating member P1 and the second actuating member P2 may pivot by an axle P. During pivotal movement of the first power unit F1 from the second position to the first position, the extension frame 24 of the swaying frame 2 actuates the first actuating member P1 to pivot, assisting in pivotal movement of the third power unit F3 from the first position to the second position, and vice versa. The function of the second actuating member P2 provides a similar function between the second power unit F2 and the fourth power unit F4.

For clear and concise description, in the swaying frame 2 shown in FIGS. 27 and 28, the swaying frame 2 of the first power unit F1 is referred to as the first swaying frame 2a, the swaying frame 2 of the second power unit F2 is referred to as the second swaying frame 2b, the swaying frame 2 of the third power unit F3 is referred to as the third swaying frame 2c, and the swaying frame 2 of the fourth power unit F4 is referred to as the fourth swaying frame 2d. Furthermore, the extension frame 24 of the first swaying frame 2a is referred to as the first extension frame 24a, the extension frame 24 of the second swaying frame 2b is referred to as the second extension frame 24b, the extension frame 24 of the third swaying frame 2c is referred to as the third extension frame 24c, and the extension frame 24 of the fourth swaying frame 2d is referred to as the fourth extension frame 24d. Moreover, the abutting portion 29 located on the first swaying frame 2a is referred to as the first abutting portion 29a, the abutting portion 29 located on the second swaying frame 2b is referred to as the second abutting portion 29b, the abutting portion 29 located on the third swaying frame 2c is referred to as the third abutting portion 29c, and the abutting portion 29 located on the fourth swaying frame 2d is referred to as the fourth abutting portion 29d.

With reference to FIGS. 27 and 28, the four swaying frames 2 (2a, 2b, 2c, 2d) sequentially contact with the first end E1 or the second end E2 of the pivotal module E by the abutting portion 29 (29a, 29b, 29c, 29d) of a swaying frame 2. The abutting sequence of the four swaying frames 2 (2a, 2b, 2c, 2d) contacting with the first end E1 or the second end E2 is not limited in the present invention. As an example, the sequence is the abutting portion 29 (29a, 29b, 29c, 29d) of the second swaying frame 2b, the third swaying frame 2c, the fourth swaying frame 2d, and then the first swaying frame 2a, which abuts against the first end E1 or the second end E2 of the pivotal module E.

Specifically, when the second swaying frame 2b is in the second position, the second abutting portion 29b of the second swaying frame 2b presses against the second end E2 of the pressing board to move the second end E2 of the pressing board to the lowest position and to pivot the first swaying frame 2a to the first position. At this time, the extension frame 24a of the first swaying frame 2a actuates an end of the first actuating member P1 (as shown in FIG. 27), such that the other end of the first actuating member P1 actuates the extension frame 24c of the third swaying frame 2c, pivoting the third swaying frame 2c to the second position, which causes the third abutting portion 29c of the third swaying frame 2c to press against the first end E1 of the pressing board to thereby move the first end E1 of the pressing board downward to the lowest position and move the second end E2 of the pressing board upward as well as pivoting the second swaying frame 2b to the first position. At this time, the extension frame 24b of the second swaying frame 2b actuates an end of the second actuating member P2, and the other end of the second actuating member P2 actuates the extension frame 24d of the fourth swaying frame 2d, pivoting the fourth swaying frame 2d to the second position, which, in turn, causing the fourth abutting portion 29d of the fourth swaying frame 2d to press against the second end E2 of the pressing board and move the second end E2 of the pressing board downward to the lowest position. Furthermore, the first end E1 of the pressing board is moved upward, and the third swaying frame 2c pivots to the first position. At this time, the extension frame 24c of the third swaying frame 2c actuates an end of the first actuating member P1 (as shown in FIG. 27), and the other end of the first actuating member P1 actuates the extension frame 24a of the first swaying frame 2a to pivot the swaying frame 2a to the second position.

Thus, in the gravity-driven electricity generating device according to the present invention, by the four power units F jointly driving a pivotal module E, the four power units F operate in sequence to form a cycle, such that the pivotal module E can pivot repeatedly to enable rotation of a generator for generating electricity. Namely, by replacing the external module unit U (providing an external force to the first power unit F1 and the second power unit F2) with the first actuating member P1 or the second actuating member P2, the four power units F can be interlocked and operate reliably in sequence, enabling rotation of a generator for generating electricity. Thus, this embodiment can enhance the smoothness and efficacy of rotation of the generator generating electricity.

Although the gravity-driven electricity generating device according to the present invention has been set forth with respect to several different embodiments, the structures of the power units, external modules, the auxiliary external force modules, the pre-push modules, the pivotal modules, and the energy storage module are fully disclosed with various embodiments. Furthermore, in the gravity-driven electricity generating device according to the present invention, the power units, the external modules, the auxiliary external force modules, the pre-push modules, the pivotal modules, and the energy storage module in the above embodiments may be combined and replaced as desired, which can be easily appreciated and accomplished by any person skilled in the art. The present invention is not limited in this regard.

Each of the above embodiments has been fully disclosed with regard to how to shift the center of gravity to form the first power and the second power, how to return the center of gravity, and how to use the first power and the second power to operate repeatedly. With reference to FIGS. 1 and 2 again, the present invention further provides a method for generating electricity using gravity. The method uses two power units to repeatedly provide two powers for repeatedly pivoting a pivotal module, thereby enabling rotation of a generator for generating electricity. The method includes: providing a first external force to shift a center of gravity of a first swaying frame 2a of a first power unit F1 in a first direction, thereby outputting a first power, with the first power actuating a pivotal module E to pivot in the first direction; and providing a second external force to shift a center of gravity of a second swaying frame 2b of a second power unit F2 in the first direction, thereby outputting a second power, with the second power actuating the pivotal module E to pivot in the second direction. When the pivotal module E pivots in the first direction, the pivotal module E further enables the center of gravity of the second pivotal module 2b to shift in the second direction. When the pivotal module E pivots in the second position, the pivotal module E further enables the center of gravity of the first pivotal module 2a to shift in the second direction. Thus, the pivotal module E pivots repeatedly to enable rotation of a generator for generating electricity.

With reference to FIGS. 1 and 2 again, the method for generating electricity using gravity according to the present invention further includes providing an auxiliary external force to provide a force to assist the center of gravity of the first power unit F1 and the center of gravity of the second power unit F2 in the movement in the first direction and returning in the second direction.

With reference to FIGS. 19 and 21 again, the method for generating electricity using gravity according to the present invention further includes providing an energy-storing mechanism. The first power provided by the first power unit F1 and the second power provided by the second power unit F2 are partially stored in an energy storage module 5, and the power partially stored in the energy storage module 5 is used to aid returning movement of the first swaying frame 2a and the second swaying frame 2b.

In the gravity-driven electricity generating device and the method for generating electricity using gravity according to the present invention, the external force module U does work on the power unit F to cause rotational movement of the power unit F, in which the work done by the external force is converted into rotational energy. Furthermore, the power units F can do work on each other to transmit kinetic energy, and the power units F can do work on the pivotal module E to rotate the pivotal module E and thereby to drive a generator. The above processes of continuous conversion between work and energy fulfills the work-energy theorem. Furthermore, during the pivotal movements of the power units F and the pivotal module E, the rotational energy can be converted into gravitational potential energy, elastic potential energy, and magnetic potential energy, which can be stored in elements, such as a plurality of balancing weights W, elastic elements, returning elements, frames, and magnetic elements. The stored potential energy can be used to provide energy for returning and continuous rotation of the power units F and the pivotal module E. Therefore, the present invention fulfils the work-energy theorem and the law of conservation of energy.

In view of the foregoing, with the gravity-driven electricity generating device and the method for generating electricity using gravity according to the present invention, by pivotal movement of the swaying frame of each of the first power unit and the second power unit, the center of gravity of the swaying frame can be shifted, and the gravitational potential energy of the swaying fame is converted into the rotational power for the pivotal movement, thereby driving a respective pivotal module to pivot repeatedly. Furthermore, the power enables the center of gravity of the swaying frame of the other power unit to shift in the second direction, and two external force modules provide an external force to actuate the swaying frames of the two power units to pivot in the first direction. The auxiliary external force module can provide an auxiliary external force to enable the swaying frame to pivot more easily. The energy storage module can store a portion of the first power and a portion of the second power, which provides assistance in returning of the swaying frame, such that the operation of the gravity-driven electricity generating device can be more smooth, which enables rotation of a generator for generating electricity, thereby providing a green power generation.

## Claims

1. A gravity-driven electricity generating device **characterized in** comprising:
a pivotal module (E) including a pressing board pivotable about a pivot (E3);
a first power unit (F1) including a first swaying frame (2a), wherein a first external force is provided to pivot the first swaying frame (2a) from a first position to a second position to output a first power, thereby moving a first end (E1) of the pressing board downward and moving a second end (E2) of the pressing board upward to pivot in a first direction; and
a second power unit (F2) including a second swaying frame (2b), wherein a second external force is provided to pivot the second swaying frame (2b) from a first position to a second position to output a second power, thereby moving the first end (E1) of the pressing board upward and moving the second end (E2) of the pressing board downward to pivot in a second direction;
wherein upward movement of the first end (E1) of the pressing board causes the first swaying frame (2a) to pivot in the second direction to the first position, and a first external force module (U1) provides the first external force; and
downward movement of the second end (E2) of the pressing board causes the second swaying frame (2b) to pivot in the second direction to the first position, and a second external force module (U2) provides the second external force.

2. The gravity-driven electricity generating device as claimed in claim 1, **characterized in that** the first swaying frame (2a) and the second swaying frame (2b) are disposed symmetrically on two sides of the pivotal module (E), wherein when each of the first swaying frame (2a) and the second swaying frame (2b) pivots in the first direction, an abutting portion (29) of each of the first swaying frame (2a) and the second swaying frame (2b) outputs a respective one of the first power and the second power to a respective one of the first and second ends (E1, E2) of the pressing board, thereby pivoting the pressing board in a respective one of the first direction and the second direction.

3. The gravity-driven electricity generating device as claimed in claim 1, **characterized in that** each of the first swaying frame (2a) and the second swaying frame (2b) includes an extension frame (24), wherein when each of the first swaying frame (2a) and the second swaying frame (2b) pivots in the second direction, the two extension frames (24) respectively approaching or colliding with the first and second external force modules (U1, U2), thereby providing the first external power and the second external power.

4. The gravity-driven electricity generating device as claimed in claim 1, **characterized in** further comprising two pre-push modules (4) disposed between the first power unit (F1) and the second power unit (F2), wherein each of the first and the second swaying frames (2a, 2b) includes a sliding track (22) and a sliding member (23), wherein each of the two pre-push modules (4) incudes a driving member (41) pivotable about a pivotal center (42), wherein each driving member (41) has a push portion (43) on an end thereof and a pressed portion (44) on another end thereof, wherein the two push portions (43) are configured to abut the two sliding members (23), and wherein the two pressed portions (44) are configured to be abutted by abutting portions (29) of the first and second swaying frames (2a, 2b).

5. The gravity-driven electricity generating device as claimed in claim 1, **characterized in that** the pivotal module (E) includes a first pivotal module (Ea) and a second pivotal module (Eb), wherein the pressing board includes a first pivotal portion (E4a) and a second pivotal portion (E4b), wherein both the first pivotal portion (E4a) and the second pivotal portion (E4b) are located on a bottom side of the pressing board, wherein the first pivotal portion (E4a) and the second pivotal portion (E4b) are located on two sides of a center of the pivotal module (E), wherein the first pivotal portion (E4a) pivots about a pivot (E3a) of the first pivotal module (Ea), and wherein the second pivotal portion (E4b) pivots about a pivot (E3b) of the second pivotal module (Eb).

6. The gravity-driven electricity generating device as claimed in claim 1, **characterized in** further comprising:
a third power unit (F3) including a third swaying frame (2c), wherein a third external force is provided to pivot the third swaying frame (2c) from a first position to a second position to output a third power, thereby moving the first end (E1) of the pressing board downward and moving the second end (E2) of the pressing board upward to pivot in a first direction; and
a fourth power unit (F4) including a fourth swaying frame (2d), wherein a fourth external force is provided to pivot the fourth swaying frame (2d) from a first position to a second position to output a fourth power, thereby moving the first end (E1) of the pressing board upward and moving the second end (E2) of the pressing board downward to pivot in a second direction,
wherein the first swaying frame (2a) and the third swaying frame (2c) are adjacent to each other and have a first actuating member (P1) therebetween, wherein the second swaying frame (2b) and the fourth swaying frame (2d) are adjacent to each other and have a second actuating member (P2) therebetween, where each of the first actuating member (P1) and the second actuating member (P2) pivots about an axle, wherein during pivotal movement of each of the first, second, third, and fourth power units (F1-F4) from the second position to the first position, an extension frame (24) of each of the first, second, third, and fourth swaying frames (2a-2d) actuates a respective one of the first and second actuating members (P1, P2) to pivot, assisting in pivotal movement from the first position to the second position of an associated one of the first, second, third, and fourth swaying frames (2a-2d) of an adjacent one of the first, second, third, and fourth power units (F1-F4).

7. The gravity-driven electricity generating device as claimed in claim 1, **characterized in** further comprising:
a first frame (52) in a form of a substantially rectangular hollow frame, wherein the first frame (52) includes a first end (52a) and a second end (52b), wherein the second end (52b) of the first frame (52) is coupled with the second end (E2) of the pressing board of the pivotal module (E), wherein the first end (52a) of the first frame (52) includes a first guiding board (521) having a first guiding portion (521a) and a second guiding portion (521b) having an end connected to the first guiding portion (521a), and wherein another end of the second guiding portion (521b) forms a free end (521c); and a second frame (53) in a form of a substantially rectangular hollow frame, wherein the second frame (53) includes a first end (53a) and a second end (53b), wherein the first end (53a) of the second frame (53) is coupled with the first end (E1) of the pressing board of the pivotal module (E), wherein the second end (53b) of the second frame (53) includes a second guiding board (531) having a first guiding portion (531a) and a second guiding portion (531b) having an end connected to the first guiding portion (531a), and wherein another end of the second guiding portion (531b) forms a free end (531c), wherein
the first frame (52) and the second frame (53) are arranged in an X-shaped arrangement.

8. A power unit for a gravity-driven electricity generating device, the power unit is **characterized in** comprising:
a base (1) including a fulcrum (11); and
a swaying frame (2) including a pivotal portion (21) to abut and pivot about the fulcrum (11) defining a pivotal center, wherein the swaying frame (2) includes a center of gravity, wherein the swaying frame (2) defines a first side and a second side on two sides of the pivotal center, wherein the center of gravity of the swaying frame forms (2) a first position on the first side, wherein when the swaying frame (2) pivots in the first direction, the center of gravity moves from the first side to a second side of the swaying frame (2) to form a second position and to output a power.

9. The power unit for the gravity-driven electricity generating device as claimed in claim 8, **characterized in** further comprising an external force module (U), wherein the external force module (U) includes at least one elastic element (S) or at least one magnetic member, such that the swaying frame (2) collides with or approaches the external force module (U), thereby providing an external force to pivot the swaying frame (2) in the first direction.

10. The power unit for the gravity-driven electricity generating device as claimed in claim 8, **characterized in that** the swaying frame (2) includes a sliding track (22) and a sliding member (23), wherein the sliding member (23) is movable in a preset range on the sliding track (22), wherein when the swaying frame (2) pivots in the first direction, the sliding member (23) displaces to shift the center of gravity of the swaying frame (2) from the first side to the second side.

11. The power unit for the gravity-driven electricity generating device as claimed in claim 10, **characterized in that** the sliding track (22) includes a first sliding track (22a) and a second sliding track (22b), wherein the first sliding track (22a) is located on the second side of the swaying frame (2), wherein the second sliding track (22b) is located on the first side of the swaying frame (2), wherein the sliding member (23) includes a first sliding member (23a) and a second sliding member (23b), wherein the first sliding member (23a) is slidable on the first sliding track (22a), and wherein the second sliding member (23b) is slidable on the second sliding track (22b).

12. The power unit for the gravity-driven electricity generating device as claimed in claim 11, **characterized in** further comprising at least one auxiliary external force module (3) each including a rectilinear track (31) fixed on the base (1), wherein the rectilinear track (31) provides reciprocal sliding movement for a linear bearing (32), wherein two ends of an elastic element (33) are fixed on the linear bearing (32) and the second sliding member (23b), respectively.

13. The power unit for the gravity-driven electricity generating device as claimed in claim 8, **characterized in that** the base (1) includes a first fulcrum (11a) and a second fulcrum (11b), wherein the swaying frame (2) includes a first pivotal portion (21a) and a second pivotal portion (21b), wherein when the center of gravity of the swaying frame (2) is located on the first side, the swaying frame (2) pivots by the first pivotal portion (21a) and the first fulcrum (11a), and wherein when the center of gravity of the swaying frame (2) is located on the second side, the swaying frame (2) pivots by the second pivotal portion (21b) and the second fulcrum (11b).

14. A method for generating electricity using gravity, the method is **characterized in** comprising:
providing a first external force to pivot a first swaying frame (2a) of a first power unit (F1) in a first direction, thereby outputting a first power, wherein the first power actuates a pivotal module (E) to pivot in the first direction; and
providing a second external force to pivot a second swaying frame (2b) of a second power unit (F2) in the first direction, thereby outputting a second power, wherein the second power actuates the pivotal module (E) to pivot in the second direction;
wherein when the pivotal module (E) pivots in the first direction, the pivotal module (E) further enables the second swaying frame (2b) to pivot in the second direction, and wherein when the pivotal module (E) pivots in the second direction, the pivotal module (E) further enables the first swaying frame (2a) to pivot in the second direction, thereby repeatedly pivoting the pivotal module (E) to enable rotation of a generator for generating electricity.

15. The method for generating electricity using gravity as claimed in claim 14, **characterized in** further comprising providing an auxiliary external force to assist in returning of a sliding member (23), thereby assisting in pivotal movement of the first swaying frame (2a) and the second swaying frame (2b) in a respective one of the first and second directions.

16. The method for generating electricity using gravity as claimed in claim 14, **characterized in** further comprising providing an energy-storing mechanism, wherein the first power provided by the first power unit (F1) and the second power provided by the second power unit (F2) are partially stored in an energy storage module (5), and wherein the power partially stored in the energy storage module (5) is used to aid pivotal movement of the first swaying frame (2a) and the second swaying frame (2b) in the second direction.
